# EUROPÄISCHE PATENTSCHRIFT

(11) **EP 2 550 431 B1**
(45) Veröffentlichungstag und Bekanntmachung des Hinweises auf die Patenterteilung: **30.11.2016**
(21) Anmeldenummer: 11715868.3
(22) Anmeldetag: 21.03.2011
(51) Int. Cl.: E21D 20/02, F16B 13/14

(54) **VERFAHREN ZUR NACHTRÄGLICHEN ERTÜCHTIGUNG EINES BEFESTIGUNGSMITTELS UND HIERFÜR GEEIGNETE INJEKTAGE-UNTERLEGSCHEIBE**
METHOD FOR THE RETROACTIVE STRENGTHENING OF A FASTENING MEANS, AND INJECTION WASHER SUITABLE FOR THIS PURPOSE
PROCÉDÉ POUR AMÉLIORER ULTÉRIEUREMENT LA RÉSISTANCE D'UN MOYEN DE FIXATION ET RONDELLE POUR INJECTION APPROPRIÉE

(30) Priorität: 20.03.2010 DE 202010003944 U; 20.03.2010 DE 202010003943 U
(43) Veröffentlichungstag der Anmeldung: 30.01.2013
(73) Patentinhaber: Henning-Molitor, Karin, 21521 Aumühle (DE); Molitor, Volker, 14478 Potsdam (DE)
(72) Erfinder: Henning-Molitor, Karin, 21521 Aumühle (DE); Molitor, Volker, 14478 Potsdam (DE)
(74) Vertreter: Hauck Patentanwaltspartnerschaft mbB
(86) Internationale Anmeldenummer: PCT/EP2011/001383
(87) Internationale Veröffentlichungsnummer: WO 2011/116918

(56) Entgegenhaltungen:
- EP-A1- 0 263 803
- AU-B2- 415 425
- DE-A1- 1 583 066
- FR-A1- 2 122 429
- US-A- 3 379 019
- US-A- 4 140 429
- US-A1- 2002 125 647

## Beschreibung

Die Erfindung betrifft ein Verfahren zur nachträglichen Ertüchtigung eines in ein Bohrloch eingesetzten Befestigungsmittels, das sich bereits in seinem montierten Zustand befindet, und eine hierfür geeignete Injektage-Unterlegscheibe.

Befestigungsmittel zur Montage in einem Bohrloch sind in den unterschiedlichsten Ausführungen bekannt. Sie dienen insbesondere dazu, ein Objekt an einem Bauteil, z.B. einer Wand, in der sich das Bohrloch befindet, zu befestigen. Man unterscheidet zwischen mechanischen Befestigungsmitteln, die auf mechanische Weise in dem Bohrloch verankert werden, und chemischen Befestigungsmitteln, bei denen eine chemische Reaktion, etwa das Aushärten eines Bindemittels, zur Verankerung in dem Bohrloch führt. Bekannte mechanische Befestigungsmittel sind Dübel, die zumeist ein sich aufspreizendes Element, insbesondere eine Hülse, aufweisen, Schrauben, Durchsteckanker und Vorsteckanker. Chemische Befestigungsmittel werden auch als Verbund- oder Injektionsanker bezeichnet.

Aus der Druckschrift US 2002/0125647 A1 ist ein Verbundanker mit einer speziellen Unterlegscheibe bekannt geworden. Der bekannte Verbundanker weist eine Gewindestange auf, die lose in ein Bohrloch mit deutlich größerem Durchmesser eingelegt wird. Die spezielle Unterlegscheibe wird auf die Gewindestange aufgelegt und mit Hilfe einer auf die Gewindestange aufgeschraubten Mutter vorläufig gehalten. Anschließend wird ein Zement durch eine Öffnung in der Unterlegscheibe in den Hohlraum zwischen der Gewindestange und dem Bohrloch eingebracht. Nach dem Aushärten des Zements ist die Gewindestange fest in dem Bohrloch verankert. Die aus der Druckschrift bekannte Unterlegscheibe weist die Merkmale des Oberbegriffs des Anspruchs 21 auf.

Aus der Druckschrift GB 2 004 966A ist ein Verbundanker bekannt geworden, der mit Hilfe einer aushärtenden Masse in einem voluminösen, insbesondere kegelstumpfförmig geformten Bohrloch verankert wird. Hierzu wird ein Verankerungsbolzen mit Hilfe einer Hülse in einem zylindrischen Abschnitt des Bohrlochs vorläufig gehalten. Anschließend wird die aushärtende Masse durch eine Öffnung in dieser Hülse in den Hohlraum gespritzt.

Weitere vergleichbare Injektions- oder Verbundanker sind aus den Druckschriften EP 0 080 196 A2, DE 28 36 835 A1, DE 27 04 237 A1 und dem US-Patent Nr. 4,044,512 bekannt geworden.

Allen genannten chemischen Befestigungsmitteln ist gemeinsam, dass sie bereits beider Erstmontage mit dem aushärtenden Material in einem Bohrloch verankert werden.

Erst nach dem Aushärten der Masse können sie ihre Befestigungsaufgabe lösen. Insbesondere bei mechanischen Befestigungsmitteln treten immer wieder Probleme auf, die zu einer ungenügenden Befestigung führen.

Diese können einerseits in einer fehlerhaften Montage begründet sein, etwa bei nicht vorschriftsmäßig ausgeführten, oder gesäuberten Bohrlöchern, Fehlern beim Setzen des Dübels, die beispielsweise zu einem nicht vorschriftsmäßigen Aufspreizen einer Hülse führen, usw.

Andererseits können im Untergrund begründete Probleme, beispielsweise Risse im Beton oder sonstige Ermüdungserscheinungen, zu einer ungenügenden Befestigung führen.

Auch sind häufig fehlende Überwachung, Dokumentation und Ausbildungsnachweise des dübelsetzenden Personals Ursache dafür, dass im Nachhinein nicht gewährleistet werden kann, dass der Dübel/Anker die vorgesehene Last tatsächlich dauerhaft aufnehmen kann.

Infolge dessen wird ein Tausch der Anker/ Dübel mit der Folge des Versetzens der Konstruktion und einer Neuerstellung von Bohrlöchern notwendig.

Davon ausgehend ist es die Aufgabe der Erfindung, ein Verfahren zur nachträglichen Ertüchtigung eines in ein Bohrloch eingesetzten Befestigungsmittels, das sich bereits in seinem montierten Zustand befindet, zur Verfügung zu stellen, sowie eine hierfür geeignete Injektage-Unterlegscheibe.

Diese Aufgabe wird gelöst durch das Verfahren mit den Merkmalen des Anspruchs 1.Vorteilhafte Ausgestaltungen des Verfahrens sind in den sich anschließenden Unteransprüchen gegeben.

Das Verfahren zur nachträglichen Ertüchtigung eines in ein Bohrloch eingesetzten Befestigungsmittels, das sich bereits in seinem montierten Zustand befindet, weist die folgenden Schritte auf:
+ Aufsetzen einer Injektage-Unterlegscheibe, die in ein Mittelloch, eine Befüllöffnung und eine Entlüftungsöffnung aufweist, auf das zu ertüchtigende Befestigungsmittel,
+ Verfüllen von zwischen Befestigungsmittel und Bohrloch vorhandenen Hohlräumen durch Injizieren von Injektageharz durch die Befüllöffnung.

Ertüchtigung heißt, dass die Belastbarkeit eines bereits in seinem montierten Zustand befindliche Befestigungsmittels nachträglich verbessert wird. Vor der Anwendung des Verfahrens befindet sich also das Befestigungsmittel bereits in seinem montierten Zustand, sodass es grundsätzlich seine Befestigungsaufgabe bereits lösen kann und/oder für einen bestimmten Zeitraum bereits gelöst hat. Es werden durch das Verfahren also Mängel oder Schwächen der Befestigung beseitigt, die erst nach einer insoweit abgeschlossenen ersten Montage des Befestigungsmittels offenbar geworden sind, beispielsweise im Rahmen von Wartungs - oder Revisionsarbeiten.

Das bereits in ein Bohrloch eingesetzte Befestigungsmittel kann bei der Ausführung des Verfahrens in seinem montierten, in das Bohrloch eingesetzten Zustand verbleiben. Bei der Ertüchtigung wird eine Injektage-Unterlegscheibe auf das zu ertüchtigende Befestigungsmittel aufgesetzt, insbesondere auf eine auf eine Ankerstange, eine Gewindestange oder ein sonstigen zylindrischen Abschnitt des Befestigungsmittels.
Die Injektage -Unterlegscheibe weist hierzu ein Mittelloch auf, das wie das Mittelloch einer herkömmlichen Unterlegscheibe das Befestigungsmittel aufnimmt.

Zusätzlich gibt es eine Befüllöffnung und eine Entlüftungsöffnung. Durch die Befüllöffnung wird Injektageharz injiziert, insbesondere ein niedrig viskoses Injektageharz.

Das Injektageharz kann z.B. eine unmittelbar vor dem Injizieren hergestellte Mischung zweier Komponenten (Harz und Härter) sein und härtet nach dem Injizieren aus. Durch die Befüllöffnung wird das Injektageharz in die zwischen

Befestigungsmittel und Bohrloch vorhandenen Hohlräume eingebracht. Es kann dabei auchfeinste Spalte ausfüllen. Ein unkontrollierter Austritt des Injektageharzes zwischen dem Befestigungsmittel und dem Öffnungsrand des Bohrloches wird durch die Injektaageunterlegscheibe und deren Dichtgummi verhindert.

Durch das Entlüftungsloch kann in den genannten Hohlräumen vorhandene Luft (oder auch Fremdflüssigkeiten wie z.B. Regenwasser) entweichen.

Vorhandene Flüssigkeiten im Bereich der Hohlräume werden verdrängt und durch die Entlüftungsöffnung rausgedrückt.
Die von uns entwickelten Harze legen sich unter alle gängigen Flüssigkeiten und drücken diese so hoch und hinaus.

Nach dem Aushärten des Injektageharzes in den genannten Hohlräumen ist ein Klebeverbund zwischen dem Befestigungsmittel und dem Injektageharz und ein Haftverbund zwischen dem Injektageharz und der Bohrlochwandung hergestellt.

Es entsteht dadurch ein Kraftverbund zwischen dem Befestigungsmittel und dem tragenden Untergrund. Dadurch wird eine gewünschte Belastbarkeit der Befestigungsmittel wieder hergestellt und dauerhaft afrechterhalten. (Konservieren derEinbausituation).

Gleichzeitig wird eine Korrosion des Befestigungsmittels unterbunden.

Dieses gilt auch für Bewehrungseisen, die unter Umständen bei der Einbringung des Bohrlochs in den Untergrund freigelegt oder beschädigt worden sind.

Auch diese werden elektrolytischen Vorgängen und elektrolytischen Spannungsreihen zwischen sich berührenden Metallen, insbesondere im Falle einer angebohrten Bewehrung, unterbunden. Auch dies wirkt einer Korrosion entgegen. Hohlräume zwischen Befestigungsmittel und Bohrloch werden bei dem Verfahren bevorzugt vollständig ausgefüllt. Eine Ausfüllung der Hohlräume im Dübel wird erreicht, wenn eine Eintrittsöffnung für z.B. Harz vorhanden ist. Im Bohrloch vorhandene Flüssigkeiten werden verdrängt und durch die Entlüftungsöffnung herausgedrückt. Der Ringspalt am Dübel wird verfüllt, so dass dieser höhere dynamische Lasten aufnehmen kann, da durch die Verfüllung des Ringspaltes am Dübel die Dübelbewegung am Bohrlochmund minimiert wird.

Ein weiterer Vorteil des Verfahrens ist, dass das Befestigungsmittel während der nachträglichen Ertüchtigung in seiner Position verbleibt. Es muss nicht ausgetauscht werden, was insbesondere in schwer zugänglichen Bereichen eine erhebliche Arbeitserleichterung bedeutet.

In einer Ausgestaltung wird das Verfahren ausgeführt, ohne ein mit dem Befestigungsmittel befestigtes Objekt zu entfernen. Das befestigte Objekt kann beispielsweise eine Stahlplatte oder eine Konsole sein. Bei der nachträglichen Ertüchtigung kann ein solches Objekt in seiner befestigten Position verbleiben. Insbesondere bei komplexen Anlagen, die eine Vielzahl von Befestigungsmitteln zum Beispiel an Konsolen ausweisen, können die einzelnen Befestigungsmittel mit geringem Aufwand und gegebenenfalls nacheinander ertüchtigt werden.

In einer Ausgestaltung wird durch das Injizieren des Injektageharzes eine Verfestigung des umgebenden Betons, Mauerwerks oder Holzes erreicht. Bei dem Verfahren dringt das Injektageharz in feinste Risse, Poren oder sonstige Hohlräume des umgebenden Materials ein und führt dadurch zu einer Verfestigung. Dies wird auch als Vergütung der umgebenden Materialien bezeichnet und trägt zu einer hohen Belastbarkeit des Befestigungsmittels bei. Das Harz vergütet den Beton im Bereich der Kontaktflächen.

In einer Ausgestaltung werden beim Verfüllen Hohlräume, die durch Plastizieren von Beton beim Anziehen des Befestigungsmittels gemäß dessen Zulassung oder Hohlräume, die durch das Setzen des Befestigungsmittels mit Hammerbohrverfahren entstanden sind, verfüllt. Auch diese Maßnahme trägt zu einer optimalen Belastbarkeit des Befestigungsmittels bei.

In einer Ausgestaltung wird vor dem Aufsetzen der Injektage-Unterlegscheibe eine auf dem Befestigungsmittel sitzende Mutter gelöst. Mit der Mutter war vor dem Lösen das Befestigungsmittel angezogen oder ein Objekt an dem Befestigungsmittel befestigt. Durch das Lösen und gegebenenfalls vollständige Entfernen der Mutter wird das Befestigungsmittel für das Aufsetzen der Injektage-Unterlegscheibe zugänglich. Gegebenenfalls wird auch eine herkömmliche Unterlegscheibe, die sich im ursprünglichen Montagezustand des Befestigungsmittels unterhalb der Mutter befindet, entfernt.

In einer Ausgestaltung wird beim Aufsetzen der Injektage-Unterlegscheibe eine vorhandene Unterlegscheibe des Befestigungsmittels gegen die Injektage-Unterlegscheibe ausgetauscht. Es kann auch die alte Unterlegscheibe auf die Injektage-Unterlegscheibe aufgesetzt werden. Mit anderen Worten ersetzt die Injektage-Unterlegscheibe eine herkömmliche Unterlegscheibe, indem sie im Wesentlichen in derselben Position angeordnet wird. Die Injektage-Unterlegscheibe kann während der Ausführung des Ertüchtigungsverfahrens und auch nach dessen Abschluss die Funktion der ursprünglich verwendeten Unterlegscheibe erfüllen. Sie kann also nach erfolgter Ertüchtigung in der Position der ursprünglich vorhandenen Unterlegscheibe verbleiben.

In einer Ausgestaltung wird nach dem Aufsetzen der Injektage-Unterlegscheibe eine Mutter wieder fest auf das Befestigungsmittel aufgeschraubt. Es kann sich um eine neue Mutter oder um eine vor der Ausführung des Verfahrens auf dem Befestigungsmittel sitzende Mutter handeln. Durch das feste Aufschrauben der Mutter wird die Injektage-Unterlegscheibe sicher in ihrer Position gehalten, z.B. wird das notwendige Drehmoment auf die Mutter aufgebracht. Dadurch kann das Injektageharz durch die Befüllöffnung injiziert werden, ohne dass es unkontrolliert unterhalb oder seitlich der Injektage-Unterlegscheibe austritt.

In einer Ausgestaltung werden Spalte zwischen Injektage-Unterlegscheibe und einer Gewindestange des Befestigungsmittels vor dem Injizieren mit einem Dichtmittel oder einer Dichtung abgedichtet. Das Dichtmittel kann beispielsweise Silikon oder eine sonstige Dichtungsmasse sein. Die Dichtung kann beispielsweise ein Dichtungsring aus Kunststoff oder Gummi sein. Durch diese Dichtungsmaßnahmen wird verhindert, dass Injektageharz zwischen der Injektage-Unterlegscheibe und der Gewindestange austritt. Hierdurch wird einerseits verhindert, dass das Injektageharz an Stellen gelangt, an denen es nicht erwünscht ist, beispielsweise auf einen Gewindeabschnitt des Befestigungsmittels, auf den später eine weitere Mutter aufgeschraubt werden soll. Gleichzeitig wird durch die erzielte Dichtwirkung gewährleistet, dass in die Befüllöffnung injiziertes Harz die Hohlräume zwischen Befestigungsmittel und Bohrloch in der gewünschten Weise verfüllt.

In einer Ausgestaltung wird auf eine Gewindestange des Befestigungsmittels ein zylindrischer Deckel aufgeschraubt, der ein Austreten von Injektageharz verhindert, insbesondere aus dem Gewindespalt zwischen Gewindestange und Mutter. Das Aufschrauben des zylindrischen Deckels erfolgt vor dem Injizieren des Injektageharzes. Der Deckel kann beispielsweise aus Kunststoff, Gummi oder einem anderen Material sein. Er kann einen Kopf der Gewindestange und/oder eine auf der Gewindestange sitzende Mutter abdecken und so eine Dichtwirkung erzielen und einer Verunreinigung der Gewindestange und/oder der Mutter entgegenwirken.

In einer Ausgestaltung wird vor dem Injizieren eine zylindrische Pressdichtung gesetzt. Diese kann verhindern, dass Injektageharz unkontrolliert in mit dem Befestigungsmittel fixierte Bauteile wie z.B. Stahlkonsolen austritt. Bei gleicher Ausgestaltung wird durch eine keramische zylindrische Dichtung erreicht, dass eine Hitzeübertragung von der Metallkonsole zum Harz unterbunden wird.

In einer Ausgestaltung wird in die Befüllöffnung und/oder in die Entlüftungsöffnung ein Klemmstift gesetzt. Der Klemmstift dient als Einfüllstutzen und kann mit einem Setzgerät in die jeweilige Öffnung eingesetzt werden. Der Klemmstift kann rohrförmig sein und mit einem Schlauch verbindbar. Er kann beispielsweise aus Kunststoff oder Metall bestehen. Der Klemmstift bzw. die Klemmstifte können auf der Injektage-Unterlegscheibe vormontiert oder mit dieser fest verbunden sein.

In einer Ausgestaltung wird während des Injizierens des Injektageharzes Luft durch die Entlüftungsöffnung abgeführt. Diese planmäßige Entlüftung erleichtert ein vollständiges Verfüllen der Hohlräume zwischen Befestigungsmittel und Bohrloch. Es kann so lange injiziert werden, bis aus der Entlüftungsöffnung keine Luft mehr austritt, sondern nur noch Injektageharz. Dies ist ein Indiz dafür, dass alle Hohlräume vollständig mit Injektageharz gefüllt sind.

In einer Ausgestaltung wird an die Entlüftungsöffnung bzw. einen darin gesetzten Klemmstift ein Entlüftungsschlauch angeschlossen. Durch den Entlüftungsschlauch wird der Austritt des Injektageharzes kanalisiert und einfach überprüfbar. Auch dies trägt zu einer vollständigen Verfüllung der genannten Hohlräume bei.

In einer Ausgestaltung ist mit dem Befestigungsmittel eine Stahlplatte befestigt und ein Zwischenraum zwischen Stahlplatte und Untergrund wird beim Verfüllen ebenfalls mit Injektageharz verfüllt. Dadurch wird die Stahlplatte kraftschlüssig mit dem tragenden Untergrund verbunden, was bis zu einer Tiefe des Hohlraums zwischen Stahlplatte und Untergrund von ungefähr 6 mm möglich ist. Bei größeren Dimensionen kann das Harz z.B. mit Fasern oder anderen Füllstoffen modifiziert werden. Die Verfüllung unter der Konsolplatte ist sehr sinnvoll, da Statiker bei ihren Berechnungen die Konsolen auf dem Untergrund als weitestgehend plan anliegend annehmen, was durch Untergrundunebenheiten oder Stahlverformungen oft nicht gegeben ist. Der statisch korrekte Zustand wird mit der Verfüllung erreicht. Durch das flächige Verkleben der Stahlplatte am Untergrund kann diese zusätzliche Zugkräfte aufnehmen. Zur Optimierung der Verfüllung kann ein Unterdruck über die Entlüftungsöffnung hergestellt werden.

In einer Ausgestaltung wird die Stahlplatte gegenüber dem Untergrund, insbesondere einer Betonoberfläche, verdämmt. Durch die Verdämmung wird ein Freiraum zwischen Stahlplatte und Betonoberfläche abgedichtet, sodass das Injektageharz nicht unkontrolliert austritt, sondern den Hohlraum zwischen Stahlplatte und Betonoberfläche idealerweise vollständig ausfüllt.

In einer Ausgestaltung wird an einer oberen Ecke der Stahlplatte ein Entlüftungsschlauch montiert, durch den beim Verfüllen kontrolliert Injektageharz austritt. Der Entlüftungsschlauch wird zusätzlich zur Entlüftung über die Entlüftungsöffnung der Injektage-Unterlegscheibe eingesetzt und erleichtert die Kontrolle des Verfüllvorgangs des Zwischenraums zwischen Stahlplatte und Untergrund.

In einer Ausgestaltung erhält die Stahlplatte ein Loch, durch das zusätzlich Injektageharz injiziert wird. Auch diese Maßnahme begünstigt ein vollständiges Verfüllen des Hohlraums zwischen Stahlplatte und Untergrund.

In einer Ausgestaltung ist das Befestigungsmittel ein Dübel, eine Schraube, ein Durchsteckanker oder ein Vorsteckanker. Bevorzugt ist das Befestigungsmittel also ein mechanischer Anker. Das Befestigungsmittel ist im Wesentlichen zylindrisch oder weist zumindest einen zylindrischen Abschnitt auf.

In einer Ausgestaltung weist der Dübel eine zentrisch angeordnete Gewindestange oder -schraube auf. Auf diese zentrisch angeordnete Gewindestange oder -schraube, die auch als Ankerstange oder Ankerbolzen bezeichnet werden kann, wird die Injektage-Unterlegscheibe mit ihrem Mittelloch aufgesetzt.

In einer Ausgestaltung des Verfahrens wird eine Injektage-Unterlegscheibe gemäß der nachfolgend erläuterten Art verwendet.

Die oben genannte Aufgabe wird ebenfalls gelöst durch die Injektage-Unterlegscheibe zur Einbringung eines liquiden Materials zur Ertüchtigung eines Befestigungsmittels mit den Merkmalen des Anspruchs 21. Vorteilhafte Ausgestaltungen der Injektage-Unterlegscheibe sind in den sich anschließenden Unteransprüchen angegeben.

Die erfindungsgemäße Injektage-Unterlegscheibe hat eine Unterseite, eine Oberseite, ein Mittelloch, ein Injektageloch und ein Entlüftungsloch. Das liquide Material kann insbesondere ein Injektageharz sein. Der Begriff "Injektageloch" wird nachfolgend synonym zu dem vorstehend verwendeten Begriff "Befüllöffnung" verwendet. Der Begriff "Entlüftungsloch" wird nachfolgend synonym zu dem vorstehend verwendeten Begriff "Entlüftungsöffnung" verwendet. Injektageloch und Entlüftungsloch erstrecken sich jeweils von der Unterseite zur Oberseite der Injektage-Unterlegscheibe. Es handelt sich ebenso wie bei dem Mittelloch jeweils um Durchgangslöcher. Das Injektageloch und/oder das Entlüftungsloch können zylindrisch und/oder konisch geschnitten sein und/oder können Senkbohrungen als Tiefenanschlag für die Be- und Entlüftungsstifte aufweisen. Die erfindungsgemäße Injektage-Unterlegscheibe ist zur Ausführung des vorstehend beschriebenen Verfahrens geeignet. Sie ermöglicht auf einfache Weise eine Zufuhr des liquiden Materials in Hohlräume zwischen Befestigungsmittel und Bohrloch und gleichzeitig eine Abfuhr der darin befindlichen Luft über das Entlüftungsloch. Mit Hilfe des Mittellochs kann die Injektage-Unterlegscheibe in einer zur Ausführung des Verfahrens geeigneten Stellung an dem Befestigungsmittel fixiert werden. Zu den weiteren Vorteilen der Injektage-Unterlegscheibe wird auf die vorstehenden Erläuterungen des Verfahrens verwiesen.

Bei der Erfindung sind auf der Unterseite zwei erste Nuten angeordnet, wobei eine der ersten Nuten vom Injektageloch zum Mittelloch führt und die andere vom Entlüftungsloch zum Mittelloch. Die erste Nut vom Injektageloch zum Mittelloch vereinfacht die Zufuhr des liquiden Materials in einen Hohlraum zwischen Befestigungsmittel und einem umgebenden Bohrloch, weil dieser Hohlraum im Montagezustand der Injektage-Unterlegscheibe mit dem Mittelloch verbunden ist. Die erste Nut vom Entlüftungsloch zum Mittelloch begünstigt aus den gleichen Gründen eine planmäßige Entlüftung des genannten Hohlraums.

In einer Ausgestaltung verläuft eine der ersten Nuten radial, schräg oder kreisbogenförmig. Es können auch beide ersten Nuten in dieser Weise verlaufen. Die ersten Nuten können je nach Anwendung der Injektage-Unterlegscheibe ausgewählt und bemessen werden. Ein radialer Verlauf der ersten Nuten stellt eine besonders kurze Verbindung zwischen dem Mittelloch und dem Entlüftungs- bzw. Injektagloch her. Ein schräger, d.h. gegenüber der Radialrichtung geneigter Verlauf oder ein kreisbogenförmiger Verlauf der ersten Nuten kann zu einer höheren mechanischen Belastbarkeit der Injektage-Unterlegscheibe führen.

In einer Ausgestaltung weist eine kreisbogenförmige erste Nut zwei Öffnungen zum Mittelloch auf. Diese Maßnahme stellt einen besonders vorteilhaften Kompromiss zwischen mechanischer Belastbarkeit und optimaler Verbindung dar.

In einer Ausgestaltung ist auf der Unterseite eine zweite Nut angeordnet, die kreisförmig zwischen einem Rand der Injektage-Unterlegscheibe und dem Injektageloch sowie dem Entlüftungsloch verläuft.
Die zweite Nut kann einen Abstand, insbesondere einen gleichmäßigen Abstand, vom Rand der Injektage- Unterlegscheibe aufweisen.

Die zweite Nut dient zur Aufnahme eines Abdichtungsmaterials, insbesondere in flexibler oder elastomerer Form, welches vor Montage der Unterlegscheibe eingebracht wird. Die zweite Nut vereinfacht eine ordnungsgemäße Abdichtung zwischen Unterseite der Injektage-Unterlegscheibe und einem angrenzenden, mit dem Befestigungsmittel befestigten Objekt bzw. dem Untergrund.

In einer Ausgestaltung ist in die zweite Nut ein Abdichtungsmaterial oder ein Dichtungsring eingebracht oder eingeklebt.

Die genannten Schritte können bereits vor Montage der Injektage-Unterlegscheibe erfolgen und vereinfachen die gewünschte Abdichtung.

In einer Ausgestaltung ist auf der Oberseite eine dritte Nut angeordnet, die kreisförmig zwischen dem Mittelloch und dem Injektageloch sowie dem Entlüftungsloch verläuft. Diese Nut dient zur Abdichtung zwischen Injektage-Unterlegscheibe und einem Schraubenkopf des Befestigungsmittels, einer weiteren

Unterlegscheibe oder einer Schraubenmutter. Auch diese Nut dient zur Aufnahme eines Abdichtungsmaterials, insbesondere in flexibler oder elastomerer Form, welches nach oder bei Montage der Unterlegscheibe eingebracht wird.

In einer Ausgestaltung ist in die dritte Nut ein Abdichtungsmaterial oder ein Dichtungsring eingebracht oder eingeklebt. Dies kann bereits vor oder auch nach der Montage der Injektage-Unterlegscheibe erfolgen. Die gewünschte Abdichtung wird auf diese Weise weiter vereinfacht.

In einer Ausgestaltung ist auf oder in das Injektageloch und/oder auf oder in das Entlüftungsloch ein abgewinkeltes oder gebogenes Röhrchen auf- bzw. eingesetzt.

Das Röhrchen kann beispielsweise aus Metall oder aus Kunststoff gefertigt sein. Durch die Abwinkelung bzw. Biegung des Röhrchens wird ein Zugang zu dem Injektageloch und/oder dem Entlüftungsloch zwecks Zufuhr des Injektageharzes oder Abfuhr der Luft vereinfacht, insbesondere in schwer zugänglichen Bereichen.

In einer Ausgestaltung ist auf der Unterseite eine vierte Nut angeordnet, die eine geringere Tiefe aufweist als die erste Nut und die kreisförmig zwischen dem Mittelloch und dem Injektageloch sowie im Entlüftungsloch verläuft.

Diese Nut dient zur Abdichtung des Loches bzw. zur Überbrückung eines Freiraums zwischen der Unterseite der Injektage-Unterlegscheibe und einem Öffnungsrand des Bohrloches bzw. einem Rand des Befestigungsmittels.

Dies ist insbesondere dann von Vorteil, wenn mittels der Injektage-Unterlegscheibe ein anderes Bauteil auf der das Bohrloch aufweisenden Wand fixiert wird, welches jedoch bei der Injektage nicht oder vorerst nicht verklebt werden soll, bzw. auch wenn die umgebenden Metalle zwecks Erwärmungsunterbindung des Harzes von diesen z.B. mit Keramik getrennt werden sollen.

In einer Ausgestaltung ist in die vierte Nut eine zylindrische Abdichtung eingesetzt oder eingeklebt. Die zylindrische Abdichtung kann den gleichen oder einen geringfügig größeren Außendurchmesser aufweisen als ein darunter befindliches Bohrloch und kann einen Freiraum zwischen der Unterseite der Injektage-Unterlegscheibe und diesem Bohrloch überbrücken.

In einer Ausgestaltung ist an der unteren Außenkante der Injektage-Unterlegscheibe umlaufend eine Verjüngung ausgebildet.

Die Verjüngung kann schräg, konvex oder konkav ausgebildet sein. Sie dient der Aufnahme von festen oder flexiblen Abdichtungsmitteln, welche nach Montage der Injektage-Unterlegscheibe aufgebracht werden können.

Die Erfindung wird nachfolgend anhand von in Figuren dargestellten Ausführungsbeispielen näher erläutert.

Es zeigen:
Fig. 1 eine Konsole mit einer Stahlplatte, die mit Befestigungsmitteln an einer Wand befestigt ist, im Schnitt vor einer Ausführung einer Ertüchtigung,
Fig. 2 die Anordnung aus Figur 1 nach erfolgter Ertüchtigung,
Fig. 3 die Konsole aus den Figuren 1 und 2 in einer Draufsicht von vorn,
Fign. 4-11 vereinfachte Schnittdarstellungen einer mit einem Befestigungsmittel an einer Wand befestigten Stahlplatte in acht aufeinander folgenden Stadien des Ertüchtigungsverfahrens,
Fign. 12-17sechs Ausführungsbeispiele von Injektage-Unterlegscheiben jeweils in einer Draufsicht.

In allen Figuren und Ausführungsbeispielen werden für sich entsprechende Teile dieselben Bezugszeichen verwendet. Alle Figuren sind teils schematisch vereinfacht.

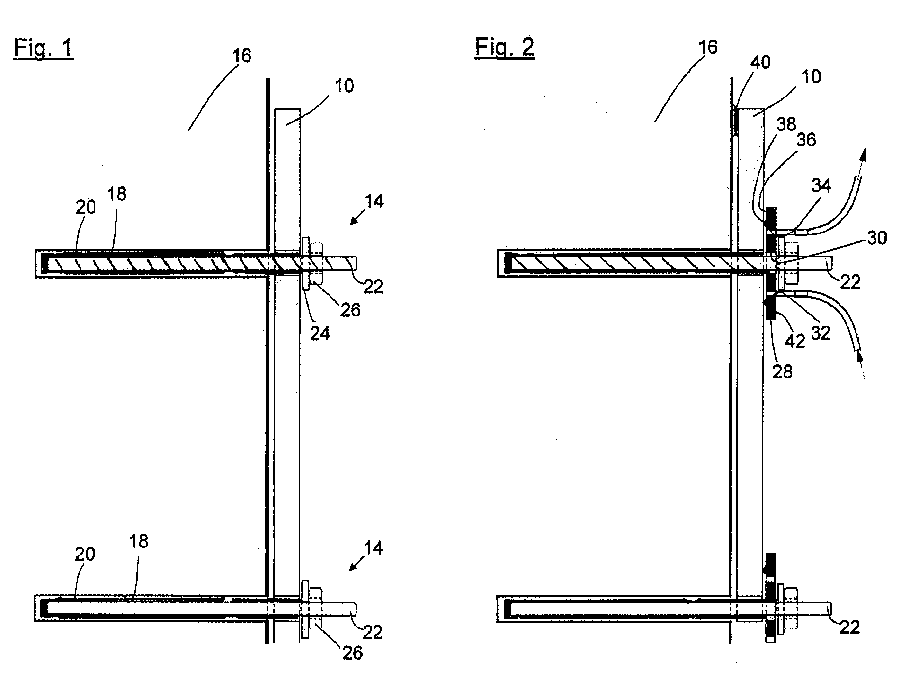

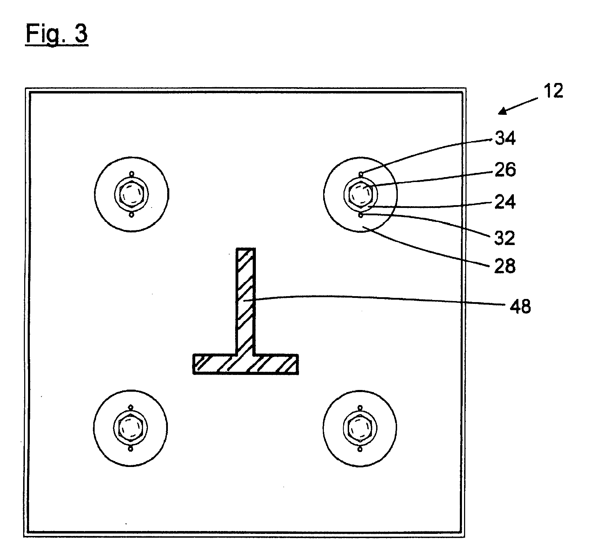

Figur 1 zeigt im Schnitt eine Stahlplatte 10 einer Konsole 12 (siehe Figur 3), die mitBefestigungsmitteln in Form von Schwerlastankern 14 an einer Wand 16 befestigtist. Die Schnittebene verläuft entlang der Längsachsen zweier gleicher Schwerlastanker 14.

Die Wand 16 besteht aus Beton und weist zwei Bohrlöcher 18 auf, in denen die Schwerlastanker 14 verankert sind. Jeder Schwerlastanker 14 umfasst eine aufspreizbare Hülse 20, eine Gewindestange 20, eine Unterlegscheibe 22 und eine Mutter 24.
Die Schwerlastanker 14 sind mit den aufgespreizten Hülsen 20 in den Bohrlöchern 18 verankert. Mit den Unterlegscheiben 24 und Muttern 26 ist die Stahlplatte 10 an die Wand 16 gespannt. Dies stellt im Ausführungsbeispiel den montierten Zustand der Schwerlastanker 14 dar.

Zwischen den Schwerlastankern 14 und den Bohrlöchern 18 befinden sich Hohlräume, gegebenenfalls innerhalb und außerhalb der Hülse 20. Weitere Hohlräume befinden sich zwischen der der Stahlplatte 10 zugewandten Oberfläche der Wand 16 und der Stahlplatte 10. Diese ergeben sich aus Krümmungen der Stahlplatte 10 und insbesondere aus Unebenheiten der Wand 16.

Im in der Figur 1 gezeigten Zustand sind die Schwerlastanker 14 mechanisch in den Bohrlöchern 18 verankert. Es wird angenommen, dass dabei die geforderten Festigkeiten nicht erreicht werden, etwa weil es beim Setzen der Schwerlastanker 14 zu Fehlern gekommen ist, oder weil der Beton der Wand 16 Risse oder sonstige Ermüdungserscheinungen aufweist.

Darum ist eine Ertüchtigung der Schwerlastanker 14 angezeigt.

Figur 2 zeigt eine der Figur 1 entsprechende Ansicht derselben Anordnung während bzw. nach erfolgter Ertüchtigung. Gegenüber der in Figur 1 dargestellten Situation wurden die folgenden Schritte ausgeführt: Die Muttern 26 wurden gelöst und samt der Unterlegscheiben 24 entfernt. Anschließend wurde eine Injektage-Unterlegscheibe 28 auf die Gewindestange 22 aufgesetzt.

Die Injektage-Unterlegscheibe 28 weist ein Mittelloch 30, eine Befüllöffnung 32 und eine Entlüftungsöffnung 34 auf.

Sie wird mit der Unterlegscheibe 24 und der Mutter 26 fixiert, wobei sie im Wesentlichen an der Position angeordnet ist, an der sich zuvor die Unterlegscheibe 24 befunden hat.

An der Unterseite 36 der Injektage-Unterlegscheibe 28 ist ein kreisrunder Dichtungsring 38 angeordnet, der in eine in Figur 2 nicht im Einzelnen dargestellte Nut eingeklebt ist.

Die Stahlplatte 10 ist gegenüber der Wand 16 verdämmt, und zwar durch das Dichtungsmaterial 40, das am Rand der Stahlplatte 10 in den Zwischenraum zwischen Wand 16 und Stahlplatte 10 eingebracht worden ist. Von der Oberseite 42 der Injektage-Unterlegscheibe 28 aus ist ein Klemmstift 44 in Form eines kleinen Röhrchens in die Befüllöffnung 32 eingesetzt. Ein zweiter Klemmstift 46, ebenfalls in Form eines Röhrchens, ist in die Entlüftungsöffnung 34 eingesetzt. Beide Klemmstifte 44, 46 sind jeweils mit einem Schlauch verbunden. Durch einen davon wird über den Klemmstift 44 und die Befüllöffnung 32 Injektageharz injiziert, das alle Hohlräume zwischen dem Schwerlastanker 14 und dem umgebenden Bohrloch 18 sowie zwischen der Wand 16 und der Unterseite der Stahlplatte 10 vollständig ausfüllt.

Beim Injizieren des Injektageharzes wird gleichzeitig über die Entlüftungsöffnung 34 und den daran angeschlossenen Klemmstift 46 mit Schlauch entlüftet. Dies erfolgt so lange, bis aus dem an den Klemmstift 46 angeschlossenen Schlauch kurzzeitig Injektageharz bzw. eine Mischung aus Luft und Injektageharz austritt.

Wenn keine Luft mehr austritt, zeigt dies eine vollständige Verfüllung der genannten Hohlräume an und das Injizieren ist abgeschlossen. Nach dem Aushärten des Injektageharzes sind die Schwerlastanker 14 ertüchtigt. Zusätzlich ist die Stahlplatte 10 flächig mit der Wand 16 verklebt.

Figur 3 zeigt eine Draufsicht auf die Konsole 12, die in den Figuren 1 und 2 an der Wand 16 befestigt ist. Diese weist eine Stahlplatte 10 und einen daran befestigten Stahlträger 48 auf.

Figur 3 zeigt den Zustand nach erfolgter Ertüchtigung aller vier Schwerlastanker 14, von denen in der Figur 3 jeweils eine Sechskantmutter 26 und eine darunter befindliche Unterlegscheibe 24 sichtbar sind. Unterhalb dieser herkömmlichen Unterlegscheiben 24 befindet sich jeweils eine Injektage- Unterlegscheibe 28 mit einer Befüllöffnung 32 und einer Entlüftungsöffnung 34.

Zweckmäßigerweise sind die Befüllöffnungen 32 unterhalb der Entlüftungsöffnungen 38 angeordnet. Die Stahlplatte 10 weist vier Bohrungen auf, durch die jeweils ein Schwerlastanker 14 hindurchgeführt ist.

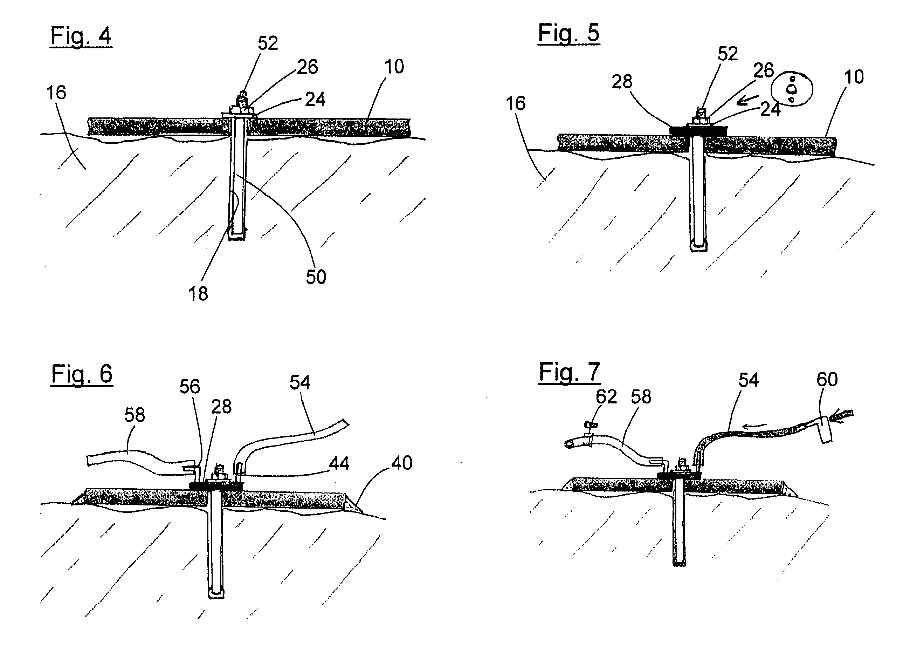

In den Figuren 4 bis 11 ist das erfindungsgemäße Verfahren nochmals an einem anderen Ausführungsbeispiel in teils schematischer Darstellung veranschaulicht. Figur 4 zeigt eine Wand 16 mit einem Bohrloch 18, in das ein Dübel 50 eingesetzt ist. Der Dübel 50 ist mechanisch in dem Bohrloch 18 verankert. Er weist einen Ankerbolzen auf, dessen oberes Ende mit einem Gewindeabschnitt 52 versehen ist.

Auf diesen Gewindeabschnitt 52 ist eine Mutter 26 aufgeschraubt. Unterhalb der Mutter 26 befindet sich eine herkömmliche Unterlegscheibe 24. Mit dem Dübel 50 ist eine Stahlplatte 10 an der Wand 16 fixiert. Wegen größerer Unebenheiten der Oberfläche der Wand 16 gibt es zwischen Wand 16 und Stahlplatte 10 größere und unregelmäßig geformte Hohlräume. Figur 4 zeigt den ursprünglichen Montagezustand des Dübels 50 vor einer erforderlich gewordenen Ertüchtigung.

In der Figur 5 wurde zunächst die Mutter 26 nebst Unterlegscheibe 24 entfernt.

Anschließend wurde eine Injektage-Unterlegscheibe 28 auf den Gewindeabschnitt 52 des Dübels 50 aufgesetzt und wieder mittels Unterlegscheibe 24 und Mutter 26 fest verschraubt.

In Figur 6 ist an eine Befüllöffnung 32 der Injektage-Unterlegscheibe ein geradliniger Klemmstift 44 angeschlossen, auf den ein Schlauch 54 aufgesteckt ist.

In eine Entlüftungsöffnung 34 der Injektage-Unterlegscheibe 28 ist ein abgewinkelter Klemmstift 56 eingesetzt, auf den ebenfalls ein Schlauch 58 aufgesteckt ist.

Außerdem wurde die Stahlplatte 10 gegenüber dem Untergrund mit einem Dichtungsmaterial 40 verdämmt.

Figur 7 zeigt die Zufuhr von Injektageharz über den Schlauch 54 mit Hilfe einer hierfür geeigneten Injektionseinrichtung 60. Am Schlauch 58 ist eine Klemme 62 befestigt. Im in der Figur 7 gezeigten Zustand ist das Injektageharz bereits bis zur Injektage-Unterlegscheibe 28 vorgedrungen.

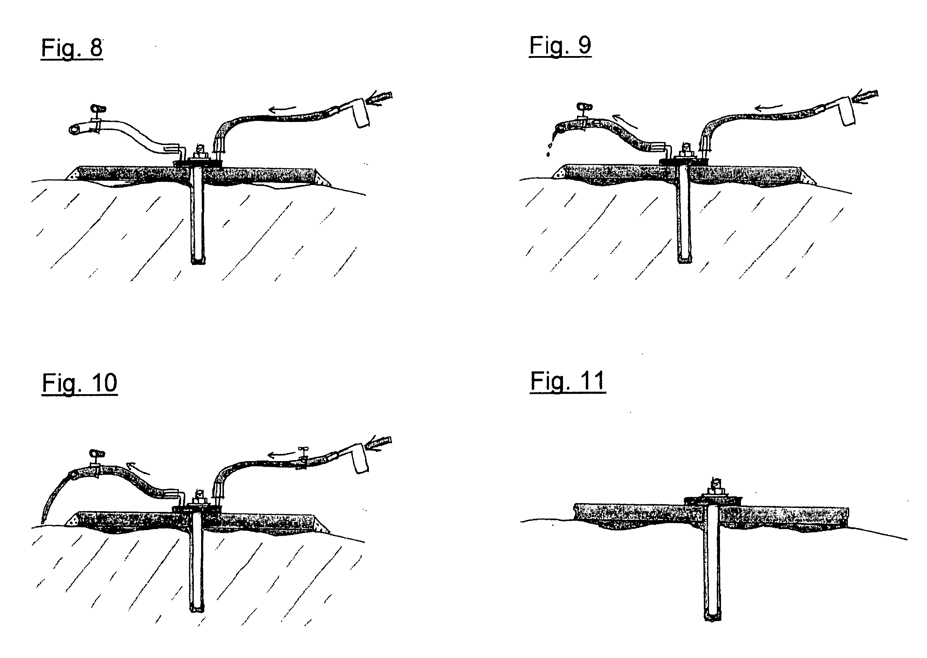

In der Figur 8 ist dargestellt, wie sich das Injektageharz unterhalb der Stahlplatte 10 und in dem Hohlraum zwischen Dübel 50 und Bohrloch 18 ausgebreitet hat. Durch die Entlüftungsöffnung 34 nebst abgewinkeltem Klemmstift 56 ist noch kein Injektageharz ausgetreten.

In der Figur 9 ist der Hohlraum zwischen Stahlplatte 10 und Wand 16 sowie der Hohlraum zwischen dem Dübel 50 und dem Bohrloch 18 bereits annähernd vollständig mit Injektageharz ausgefüllt. Mit Luftbläschchen versetztes Injektageharz tritt durch den Schlauch 58 aus.

In der Figur 10 tritt durch den Schlauch 58 nur noch Injektageharz aus, weil in allen genannten Hohlräumen keine Luft mehr befindlich ist. Alle Hohlräume sind vollständig mit Injektageharz ausgefüllt.

Figur 11 zeigt den Zustand nach dem Rückbau der Schläuche 54, 58, Klemmstifte 44, 46 und des Dichtungsmaterials 40. Das Injektageharz ist vollständig ausgehärtet und der Dübel 50 ertüchtigt, sowie die Konsole hinsichtlich ihrer statischen
Eigenschaft verbessert.

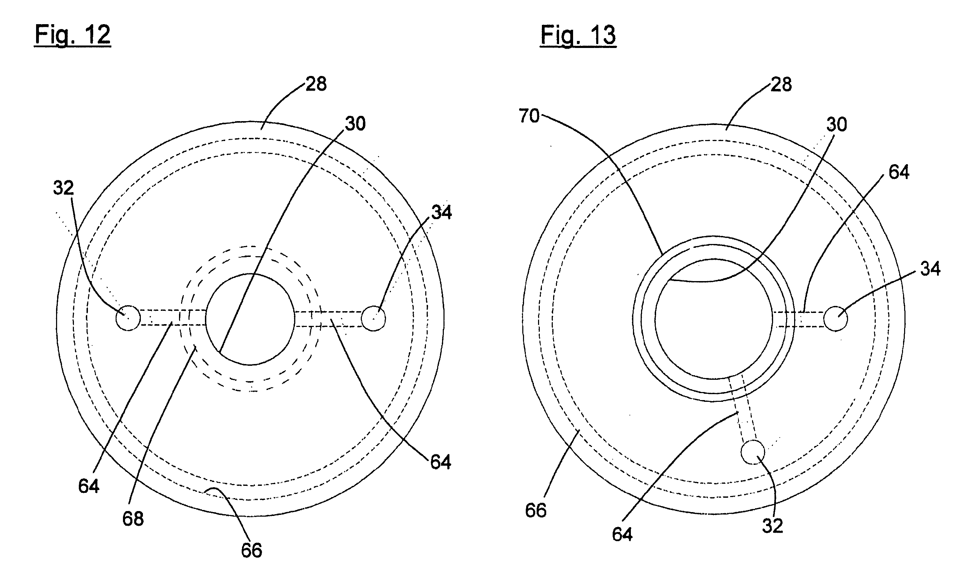

Die Figuren 12 bis 17 zeigen sechs Ausführungsbeispiele erfindungsgemäßer Injektage-Unterlegscheiben 28, jeweils in einer Draufsicht auf die Oberseite 42. Gestrichelt dargestellte Strukturen befinden sich an der Unterseite 36 der Injektage- Unterlegscheibe 28.

Figur 12 zeigt ein erstes Ausführungsbeispiel, bei dem eine Entlüftungsöffnung 34 einer Befüllöffnung 32 bezüglich eines Mittellochs 30 gegenüberliegend angeordnet ist. Ebenfalls auf der Unterseite 36 (die vom Betrachter abgewandte Seite) sind zwei erste Nuten 64 angeordnet. Die links dargestellte erste Nut 64 verbindet die Befüllöffnung 32 mit dem Mittelloch 30. Die in der Figur 12 rechts dargestellte erste Nut 64 verbindet das Mittelloch 30 mit der Entlüftungsöffnung 34.

Ebenfalls auf der Unterseite 36 angeordnet ist eine zweite Nut 66, die kreisförmig zwischen einem Rand der Injektage-Unterlegscheibe 28 und der Befüllöffnung 32 sowie der Entlüftungsöffnung 34 angeordnet ist. Schließlich verläuft ebenfalls auf der Unterseite 36 der Injektage-Unterlegscheibe 28 kreisförmig eine vierte Nut 68, die zwischen dem Mittelloch 30 und der Befüllöffnung 32 sowie der Entlüftungsöffnung 34 angeordnet ist.
Die ersten Nuten 64 sind ist tiefer ausgefräst als die vierte Nut 68.

Figur 13 zeigt ein anderes Beispiel einer Injektage-Unterlegscheibe, die hinsichtlich
des Mittellochs 30 und der zweiten Nut 66 entsprechend der Figur 12 ausgebildet ist.

Sie weist jedoch an der Unterseite 36 im Gegensatz zum Ausführungsbeispiel der Figur 12 keine vierte Nut 68 auf. Außerdem ist die Befüllöffnung 32 nicht diametral
gegenüberliegend zur Entlüftungsöffnung 34 angeordnet, sondern bezogen auf den

Mittelpunkt des Mittellochs 30 etwa in einem Winkelabstand von 80° dazu. Dementsprechend angeordnet sind auch die ersten Nuten 64 vom Ausführungsbeispiel der Figur 12 abweichend angeordnet. Sie verlaufen jeweils in radialer Richtung vom Mittelloch 30 zur Befüllöffnung 32 bzw. zur Entlüftungsöffnung 34.

An der Oberseite 42 (der dem Betrachter zugewandten Seite) der Injektage-Unterlegscheibe 28 ist eine dritte Nut 70 angeordnet, die kreisförmig zwischen dem Mittelloch 30 und der Befüllöffnung 32 sowie der Entlüftungsöffnung 34 verläuft.

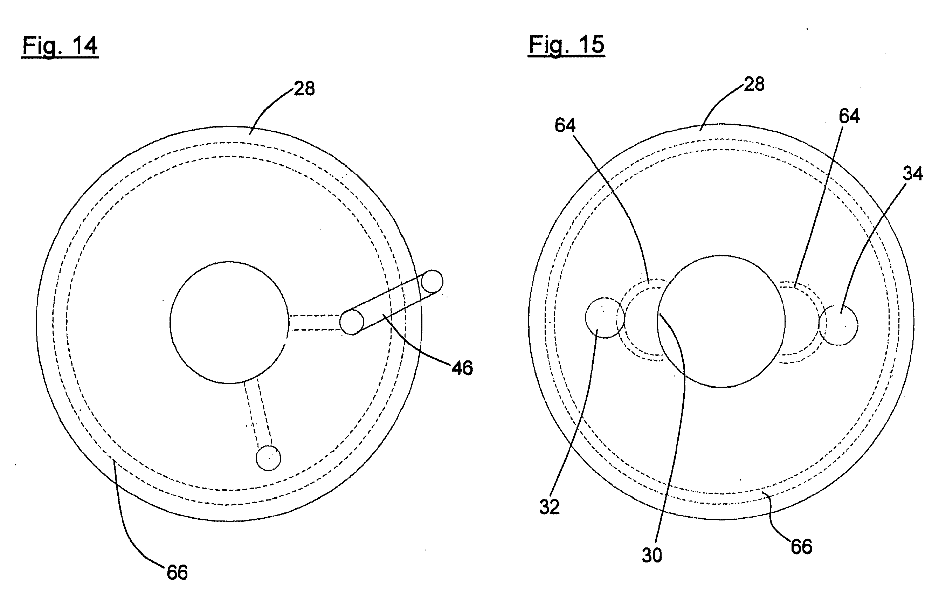

Das Ausführungsbeispiel der Figur 14 zeigt eine Injektage-Unterlegscheibe 28, die hinsichtlich der Anordnung von Befüllöffnung 32 und Entlüftungsöffnung 34 sowie zweiter Nut 66 in dem Ausführungsbeispiel der Figur 13 entspricht. Zusätzlichdargestellt ist ein in die Entlüftungsöffnung 34 eingesetzter Klemmstift 46.

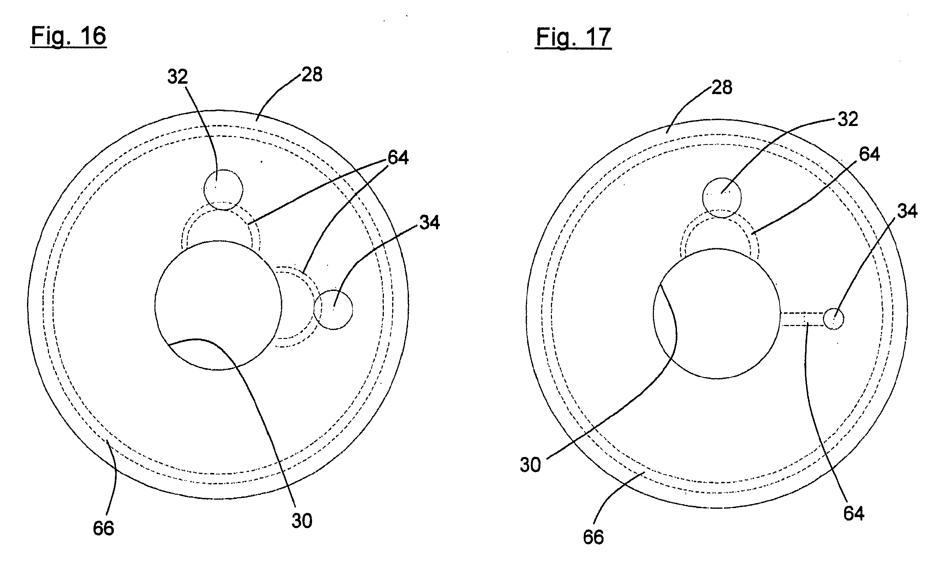

Das Ausführungsbeispiel der Figur 15 zeigt ebenfalls eine Injektage-Unterlegscheibe 28 mit einer wie bereits erläutert angeordneten zweiten Nut 66. Eine Befüllöffnung 32 und eine Entlüftungsöffnung 34 sind bezüglich des Mittellochs 30 diametral gegenüberliegend angeordnet. Erste Nuten 64 verlaufen jeweils kreisbogenförmig und weisen zwei Öffnungen zum Mittelloch 30 auf. Das Ausführungsbeispiel der Figur 16 zeigt eine Injektage-Unterlegscheibe 28, die ähnlich wie diejenige der Figur 15 ausgebildet ist. Insbesondere weist sie ebenfalls kreisförmig verlaufende erste Nuten 64 mit jeweils zwei Öffnungen zum Mittelloch 30 auf. Diese sind, ebenso wie die Befüllöffnung 32 und die Entlüftungsöffnung 34, jedoch nicht diametral gegenüberliegend, sondern in einem Winkel von ungefähr 90° bezogen auf den Mittelpunkt des Mittellochs 30 angeordnet.

Figur 17 zeigt eine weitere Injektage-Unterlegscheibe 28, die eine Kombination der Varianten gemäß Figuren 12 und 16 darstellt. Genauer ist die Befüllöffnung 32 über
eine kreisbogenförmige erste Nut 64 mit dem Mittelloch 30 verbunden. Die Entlüftungsöffnung 34 weist einen geringeren Durchmesser auf als die Entlüftungsöffnungen 34 der vorstehend beschriebenen Ausführungsbeispiele. Die Entlüftungsöffnung 34 ist über eine radial angeordnete, geradlinig verlaufende erste Nut 64 mit dem Mittelloch 30 verbunden.

Die Erfindung wird, insbesondere soweit sie das Verfahren betrifft, nachfolgend noch einmal mit teils anderen Worten und anhand weiterer Beispiele beschrieben. Verbindungsmittel wie z. B. Dübel sind in der Regel zylindrisch, sitzen in einem Bohrloch und haben im Falle des Dübels zusätzlich eine meist zentrisch angeordnete Gewindestange oder Schraube.

### PROBLEM:

Befestigungsmittel, wie Schrauben, Dübel, Durchsteckanker und Vorsteckanker haben das Problem, das sie immer wieder falsch oder fehlerhaft montiert sind und/oder das eine Nachbefestigung technisch nicht möglich ist und auch die Einbausituation und Aufgaben dieser Befestigungen, einen Tausch nicht zulassen.
Eine Zugänglichkeit über die Bauteile zur Einbringung von geeigneten liquiden Mitteln zur Ertüchtigung, gibt es nicht.

Oft besteht zudem das Problem, das das Grundbauteil oder das darauf fixierte Bauteil nicht so planeben sind wie vorgegeben.

Diese Befestigungsmittel müssen für eine Ertüchtigung in der Regel aufwendig verdämmt werden um diese nachträglich zwischen Befestigungsmittel und Bohrloch mittels Injektageharz zu injizieren. So müssen ausserdem vorgesetzte, durch den Dübel gehaltene, Bauteile wie Stahlplatten oder Konsolen vor dem nachträglichen Injizieren entfernt werden.

Hier liegt der Ansatz für unsere erhebliche Verringerung
des Aufwandes.

### LÖSUNG

Die nachfolgend beschriebene nachträgliche Ertüchtigung von Verbindungsmitteln wie z. B. Dübeln, soll die Möglichkeit bieten, die Befestigungsmittel im montierten Zustand und ohne Entfernung der mit dem Dübel befestigten Objekte wie Stahlplatten, Konsolen usw., nachträglich durch das Einbringen von geeigneten Injektionsharzen zu ertüchtigen.

Ertüchtigung heißt, zwischen Verbindungsmittel und Bohrloch vorhandene Hohlräume mit Injektionsharz vollständig zu verfüllen, das Lochspiel des Befestigungsmittels im Bohrloch zu minimieren oder sogar auszuschliessen, den Beton um das Bohrloch des Befestigungsmittels mittels Injektionsharz zu vergüten, bzw. zu verbessern.
Zwischen dem Befestigungsmittel, z. B. Dübel, und dem Beton oder Mauerwerk des Bohrloches befindet sich in Folge unserer Bearbeitung das Injektionsharz, welches zum Befestigungsmittel, z. B. Dübel einen Klebeverbund und zur Bohrlochwandung einen Haftverbund herstellt. Auch im Bereich des Dübelkopfunterschnittes, wenn vorhanden, wird das Harz eingebracht.

Die nachträgliche Ertüchtigung des Befestigungsmittels, z. B. Dübel, bedeutet einen Kraftverbund zwischen diesem und dem tragenden Untergrund herzustellen. Dieses erfolgt bei Dübeln, die im Beton gesetzt sind, bis zur Erreichung des statisch korrekten Ausbruchkegels des Dübeleinbindebereiches, um den Dübel im Beton.

Das Zusammenspiel aller Komponenten, am Beispiel einer Ertüchtigung eines Vorsteckankers beschrieben, sieht wie folgt aus:
- Die auf dem Vorsteckanker sitzende Mutter und die Unterlegscheibe werden gelöst.
- Die spezielle Injektage-Unterlegscheibe wird aufgesetzt.
- Wenn nötig wird eine zylindrische Pressdichtung vorher gesetzt, um das unkontrollierte Austreten von Harz, in mittels Befestigungsmitteln fixierte Bauteile, zu verhindern.
- Die Mutter wird wieder fest verschraubt gemäss statischen Vorgaben.
- Spalte zwischen Scheibe und Gewindestange mit Dichtmittel z. B. mit Silikon oder einer geeigneten Dichtung verschlossen.
- Auf die Gewindestange wird ein in Länge und Durchmesser geeigneter zylindrischer Deckel z. B. aus Kunststoff oder Gummi aufgeschraubt und unterbindet das Austreten von Injektagematerial. In Ausnahmefällen kann dieser Anschluss auch verdämmt werden mit z. B. Silicon oder anderen schnell härtenden Dichtungsmaterialien.
- Es werden in eines oder beide Injektage-/Lüftungsöffnungen Klemmstifte gesetzt, mittels Setzgerät.
- Durch den Anschluss Klemmstift-Injektageöffnung oder direkt in die Injektageöffnung der Injektage-Unterlegscheibe wird Harz injiziert, durch die Entlüftungsöffnung wird entlüftet. Es wird mittels OPTI-Schlauch der Anschluss der Entlüftungsöffnung verlängert und der Austritt des Harzes kanalisiert und kontrolliert.
- Nach dem Abbinden des Harzes ist der Dübel oder des Befestigungsmittel ertüchtigt, das bedeutet die Kraftübertragung in den Untergrund ist hergestellt, auch bei z. B. fehlerhaft gesetzten Dübeln.
- Ein Rückbau der Verdämmungen und Klemmstifte erfolgt.
   Das Zusammenspiel aller Komponenten, am Beispiel einer Ertüchtigung mehrerer Vor- oder Durchsteckanker, durch die z. B. eine Stahlplatte auf einer Betonoberflächebefestigt ist, beschrieben sieht wie folgt aus:
   - Die Stahlplatte wird im Bereich des Anschlusses an den Untergrund, aussen herum verdämmt, an einer der oberen Ecken wird ein Entlüftungsschlauch montiert, der mittels Klemmstift und Befestigungsmittel ENLÜ montiert wird.
   - Eine oder alle auf der Stahlplatte sitzende Muttern und die Unterlegscheiben, je nach grösse der Platte und Erfordernissen werden gelöst.
   - Die Injektage-Unterlegscheibe, bzw. Scheiben werden aufgesetzt.
   - Die Mutter wird wieder fest, gemäss statischen Vorgaben, verschraubt.
   - Spalte zwischen Scheibe und Gewindestange werden verdämmt, z. B. mit Silikon oder mit einem Dichtring verschlossen, je nach Anwendungsfall.
   - Auf die Gewindestange wird ein in Länge und Durchmesser geeigneter zylindrischer Deckel z. B. aus Kunststoff oder Gummi aufgeschraubt und unterbindet das Austreten von Injektagematerial. In Ausnahmefällen kann dieser Anschluss auch verdämmt werden mit z. B. Silicon oder anderen schnell härtenden Dichtungsmaterialien.
   - Es werden in eines oder beide Injektage-/Lüftungsöffnungen Klemmstifte gesetzt, mittels Setzgerät.
   - Durch das Injektageloch mit Klemmstift oder direkt in das Injektageloch der Injektage-Unterlegscheibe wird Harz injiziert, durch die Entlüftungsöffnung wird nur kurz Luft und Harz abgeführt, dann wird es verschlossen (Stopfen).
   - Weiteres Harz tritt hinter die Stahlplatte ein und die Luft entweicht über die Entlüftungsöffnung am Plattenrand bis auch dort Harz kontrolliert und kanalisiert austritt.
   - Nach dem Abbinden des Harzes sind die Dübel ertüchtigt, das bedeutet die Kraftübertragung in den Untergrund ist hergestellt, auch bei fehlerhaft gesetzten Dübeln. Zusätzlich ist die Stahlplatte mit dem tragenden Untergrund kraftschlüssig verbunden. Dieses ist bis zu einem Hohlraum von bis zu maximal 6 mm Tiefe möglich.
   - Je nach Erfordernis, Plattengrösse, Randbedingungen und Komponenten wie Harzviskosität, zugesetze Lösungsmittel usw. werden ein oder mehrere Dübel mit Spezialscheiben der Injektage-Unterlegscheiben versehen, über weiche Harz injiziert und zumindestens temporär entlüftet wird. Das Verfahren und seine Abfolge wird den Gegebenheiten optimal angepasst.

Zusammenfassend wird mit unserem Einbringungssystem aus mechanischen Ankern und Dübeln ein Verbundanker erzeugt und das Bohrloch zur Konservierung des Befestigungsmittels verschlossen.

Damit ertüchtigen wir nicht nur Befestigungsmittel und fehlerhaft gesetzte Befestigungsmittel statisch, sondern stoppen Korrosion an Dübeln, Ankern und ggf. angebohrter Bewehrung des Betons.

Auch elektrolytische Vorgänge, bzw. elektrolytische Spannungsreihen zwischen den Metallen, unterbrechen wir mit unserem Einbringungssystem.

Eine Ertüchtigung im laufenden Betrieb ist möglich.

Es folgen weitere stichpunktartig zusammengefasste Ausführungsbeispiele: Nachträgliche Ertüchtigung von Dübeln, Schrauben, Durch- und Vorsteckankern sowie sonstigen Befestigungs- oder Verbindungsmitteln, und/oder incl. der evtl. vorgesetzten Stahlplatten oder Konsolen mittels Injektageharz und Injektage-Unterlegscheibe,
- wobei durch die speziell aufgesetzte Injektagescheibe, Harz in alle Hohlräume der Bohrlöcher und Befestigungsmittel eingebracht werden kann.

Über die Injektage-Unterlegscheibe kann entlüftet werden, um Hohlstellen von Luft im Klebeverbund auszuschliessen (Kraftschluss Dübel-Bohrloch);
- wobei nach Verdämmung zum Untergrund durch die speziell aufgesetzte Injektage-Unterlegscheibe, durch Harzinjektage, ganze Stahlplatten diverser Größen einen Kraftschluss ohne Hohlstellen zum Untergrund erhalten;
- wobei bei Injektage mit verdämmter Stahlplatte mehrere Dübel, die durch die Stahlplatte stoßen, gleichzeitig injiziert werden können (Kraftschluss Dübel-Bohrloch bei Zugang des Injektionsharzes von Bohrloch zu Bohrloch über die Ebene hinter der Stahlplatte);
- wobei zur Ertüchtigung so wohl alle Dübel, als auch der Stahlplattenrand verdämmt werden können, z. B. mit Silicon oder anderem schnellhärtendem Dichtungsmaterial. Die Platte erhält ein oder zwei Löcher gemäss örtlichen Gegebenheiten und die Injektage erfolgt über eines der Löcher direkt oder über einen gesetzen Klemmstift. Die Entlüftung erfolgt entweder über das zweite Bohrloch in der Platte mit Klemmstift oder an einer der Plattenecken wird ein Entlüftungsschlauch montiert, der mittels Klemmstift und Befestigungsmittel ENLÜ angebracht wird;
- wobei zwischen Befestigungsmittel und Bohrloch vorhandene Hohlräume mit dem Injektionsharz verfüllt werden und aus den mechanischen Anker nach Abbindung des Harzes ein Verbundanker entsteht und/oder wobei durch das Einbringen des Injektionsharzes in die Hohlräume zwischen Befestigungsmittel und Bohrungswandung, eine Verfestigung (Vergütung) des unmittelbar umgebenden Betons, Mauerwerks oder Holzes erfolgt;
- wobei durch das Einbringen des Injektionsharzes in die Hohlräume zwischen Befestigungsmittel und Bohrungswandung in Beton sowie andere Materialien und die Verfüllung der Bohröffnung und der Hohlräume im Dübel und die Verfüllung der Bohröffnung, eine Konservierung der Einbausituation entsteht;
- wobei durch das Einbringen des Injektionsharzes in die Hohlräume zwischen Befestigungsmittel und Bohrungswandung in Beton, sowie andere Materialien und die Verfüllung der Bohröffnung und der Hohlräume im Dübel, eine Unterbindung der Korrosion an den Dübeln erfolgt;
- wobei durch das Einbringen des Injektionsharzes in die Hohlräume zwischen Befestigungsmittel und Bohrungswandung in Beton und die Verfüllung der Bohröffnung und der Hohlräume im Dübel, eine Unterbindung der Korrosion an den berührten oder angebohrten Bewehrungseisen erfolgt;
- wobei durch das Einbringen des Injektionsharzes in die Hohlräume zwischen Befestigungsmittel und Bohrungswandung in Beton und die Verfüllung der Bohröffnung und der Hohlräume im Dübel, eine Unterbindung elektrolytischer Vorgänge bzw. elekrolytischer Spannungsreihen zwischen den Metallen, insbesondere, wenn Bewehrung angebohrt wurde erfolgt;
- wobei auch im Bereich des Dübelkopfunterschnittes, wenn beim Befestigungsmittel vorhanden, das Injektageharz mittels unserem Verfahren eingebracht wird;
- wobei durch das Einbringen des Injektionsharzes in die Hohlräume zwischen Befestigungsmittel und Bohrungswandung in Beton und die Verfüllung der Hohlräume in den Befestigungsmitteln, bei fehlerhaft gesetzten Befestigungsmitteln eine Ertüchtigung erfolgt, so dass bei einem Auszugsversuch wieder der statisch optimale und geforderte Ausbruchkegel eines Befestigungsmittels erreicht wird;
- wobei durch das Einbringen des Injektionsharzes in die Hohlräume zwischen Befestigungsmittel und Bohrungswandung in Beton und die Verfüllung der Hohlräume in den Befestigungsmittel, bei leicht fehlerhaft gesetzten Befestigungsmitteln eine Ertüchtigung erfolgt, so dass bei einem "Zugversuch im erweiterten Riss" die geforderten Werte der Anker/Befestigungsmittel erreicht werden;
- wobei Dübel, Schrauben und Anker, sowie alle weiteren Befestigungsmittel in schwer zugänglichen Bereichen mit unserer Injektagemethode ertüchtigt werden können;
- wobei Dübel, Schrauben und Anker, sowie alle weiteren Befestigungsmittel im laufenden Betrieb der Anlage, bzw. Anlagen ertüchtigt werden können und die Befestigungsmittel nicht getauscht werden müssen;
- wobei durch das Einbringen des Injektionsharzes in die Hohlräume, die durch plastizieren des Betons beim Anziehen der Befestigungsmittel entstanden sind, diese komplett verfüllt und der Beton verfestigt werden. Der Verformungshohlraum der im Beton entstanden ist, wird gefüllt und es entsteht ein Kopfbolzen der statisch stabil ist, so dass das Befestigungsmittel mindestens die statisch geforderten Werte gemäß Herstellerlisten, erfüllt;
- wobei durch das Einbringen des Injektionsharzes in die Hohlräume, die durch das Setzen von Befestigungsmitteln mit Hammerbohrverfahren entstanden sind, diese Hohlräume verfüllt und der Beton verfestigt (vergütet) wird. Der Hohlraum der im Beton entstanden ist, wird gefüllt und es entsteht ein Kopfbolzen der statisch stabil ist, so dass das Befestigungsmittel mindestens die statisch geforderten Werte gemäß Herstellerlisten, erfüllt;
- wobei in unserem speziell entwickelten Verfahren, die von uns entwickelte Injektage-Unterlegscheibe eingesetzt wird, die gegen die vorhandene Unterlegscheibe des Befestigungsmittels getauscht wird und mit geeigneten Dichtungsringen und/oder Dichtmitteln, je nach örtlicher Vorgabe abgedichtet wird;
- wobei in unserem speziell entwickelten Verfahren, die von uns entwickelte Injektage-Unterlegscheibe eingesetzt wird, die gegen die vorhandene Unterlegscheibe des Befestigungsmittels getauscht wird. Diese Injektage-Unterlegscheibe enthält zusätzlich zum Mittelloch zwei Öffnungen, eine Befüll54 und eine Entlüftungsöffnung. Das Injektagemittel wird über diese Injektage-Unterlegscheibe in den zu verfüllenden Bereich injiziert. Gleichzeitig wird über die zweite vorhandene Öffnung der Injektage-Unterlegscheibe, der zu injizierende Bereich entlüftet;
- wobei in unserem speziell entwickelten Verfahren, die von uns entwickelte Injektage-Unterlegscheibe eingesetzt wird, die gegen die vorhandene Unterlegscheibe des Befestigungsmittels getauscht wird.
   Nach dem Tausch der Unterlegscheibe wird diese mit einem speziell entwickelten zylindrischen Deckel, der auf die Gewindestange aufgeschraubt wird, abgedichtet.

Die Erfindung wird, insbesondere soweit sie die Injektage-Unterlegscheibe betrifft, nachfolgend noch einmal mit teils anderen Worten und anhand weiterer Beispiele beschrieben.

Unterlegscheiben üblicher Bauart weisen eine ebene runde Fläche mit einem mittigen Loch zur Aufnahme der Schraube bzw. des Gewindeankers auf. Die Unterlegscheiben werden zur Fixierung des Schraubenkopfes oder der Mutter auf dem Gewindestab, bzw. der Lastverteilung des Anzugdruckes der Schraube oder Mutter gegen das Grundbauteil, welches verschraubt oder verdübelt wird, verwendet. Eine weitere Anwendung der Unterlegscheibe ist, über Lastverteilung um das Bohrloch andere Materialien wie Metall, Holz, Kunststoff usw. gegen das Grundbauteil zu pressen und zu fixieren.

### PROBLEM:

Befestigungsmittel, wie Schrauben, Dübel, Durchsteckanker und Vorsteckanker haben das Problem, das sie immer wieder falsch oder fehlerhaft montiert sind und/oder das eine Nachbefestigung technisch nicht möglich ist und auch die Einbausituation und Aufgaben dieser Befestigungen, einen Tausch nicht zulassen.

Eine Zugänglichkeit über die Bauteile zur Einbringung von geeigneten liquiden Mitteln zur Ertüchtigung, gibt es nicht. Oft besteht zudem das Problem, das das Grundbauteil oder das darauf fixierte Bauteil nicht so planeben sind wie vorgegeben.

### LÖSUNG:

Mit der Erfindung wird erreicht, dass ein zur Nachbefestigung und Ertüchtigung geeignetes liquides Material mittels Injektage oder andere geeignete Einbringungsverfahren, in den Dübel bzw. Anker/Schraube über diese Injektage-Unterlegscheibe eingebracht wird und in Schrauben/Anker/Dübel bis zum Fusspunkt der Befestigung im Grundbauteil eindringen kann. Somit ist die Injektage- Unterlegscheibe die Erfindung eines Zuganges zur Ertüchtigung ohne Tausch des Befestigungsmittels.

Zusätzlich ist es möglich, über diese Injektage-Unterlegscheibe geeignete liquide Mittel einzubringen, die die mittels Verklebung das Grundbauteil in dem die Schraube, der Dübel oder Anker sitzen, mit anderen durch die Befestigung auf dem Grundbauteil fixierten Materialen, kraftschlüssig zu verkleben.

Es folgen weitere stichpunktartig zusammengefasste Ausführungsbeispiele:
Eine Injektage-Unterlegscheibe für Schrauben, Dübel, Anker (Durchsteck- und Vorsteckanker) ist dadurch gekennzeichnet, dass eine Unterlegscheibe in diversen der Einbausituation angepassten Durchmessern und Lochgrössen, bzw. Materialdicken und Materialarten (Metall, Kunststoff etc) mit zwei zusätzlichen Löchern (Injektage- und Entlüftungsloch) versehen ist. Diese Löcher dienen unter anderem zur Aufnahme von Injektagestiften, die mittels Setzwerkzeug montiert werden.

Die vorstehend beschriebene Injektage-Unterlegscheibe ist dadurch gekennzeichnet, dass die zwei Injektage-/Belüftungslöcher, sowohl zylindrisch als auch konisch geschnitten sein können. Sie können auch im oberen Bereich einen anderen Durchmesser haben, als im unteren Bereich. Sie können völlig variabel zwischen Mittelloch und Nut des übernächsten Beispiels angeordnet sein.

Die vorstehend beschriebene Injektage-Unterlegscheibe ist dadurch gekennzeichnet, dass auf der Unterseite der Injektage-Unterlegscheibe vom Injektage- und vom Entlüftungsloch, gleich oder unterschiedlich dimensionierte Nuten, gerade oder schräg zum Mittelloch der Injektage-Unterlegscheibe oder kreisförmige Nuten gleicher oder differenter Dimension, mit jeweils zwei Öffnungen zum Mittelloch der Injektage-Unterlegscheibe, führen. Auch eine Kombination von beiden Nutenarten ist möglich.

Die vorstehend beschriebene Injektage-Unterlegscheibe ist dadurch gekennzeichnet, dass auf der Unterseite der Injektage-Unterlegscheibe in einem variablen Abstand zum Rand der Unterlegscheibe, zwischen dem Scheibenrand und den Injektage- /Entlüftungslöchern, eine kreisrunde Nut eingebracht ist, die in verschiedenen Dimensionen ausgeführt werden kann. Diese Nut dient zur Aufnahme eines Abdichtungsmaterials in flexibler oder elastomerer Form, welches vor Montage der Unterlegscheibe eingebracht wird oder zur Aufnahme von Dichtungsringen, die demjeweiligen Anwendungsfall in Material und Härtegrad angepasst werden und in die Nut eingeklebt werden können, jedoch nicht müssen.

Die vorstehend beschriebene Injektage-Unterlegscheibe ist dadurch gekennzeichnet, dass, wenn der Anwendungsfall es erfordert, auf der Oberseite der Injektage- Unterlegscheibe zwischen Injektage-/Entlüftungsloch und Mittelloch eine eingebrachte kreisrunde Nut, die unterschiedlich dimensioniert sein kann, eingebracht ist. Diese Nut dient zur Abdichtung zwischen Injektage-Unterlegscheibe und Schraubenkopf, einer weiteren Unterlegscheibe oder einer Schraubenmutter.

Diese Nut dient zur Aufnahme eines Abdichtungsmaterials in flexibler oder elastomerer Form, welches nach oder bei Montage der Unterlegscheibe eingebracht wird oder zur Aufnahme von Dichtungsringen, die dem jeweiligen Anwendungsfall in Material und Härtegrad angepasst werden und in die Nut eingeklebt werden können, jedoch nicht müssen.

Die vorstehend beschriebene Injektage-Unterlegscheibe Schutzansprüche ist dadurch gekennzeichnet, dass bei komplizierten Montagebereichen auf bzw. in der Unterlegscheibe abgewinkelte oder gebogene Röhrchen, auf bzw. in den Injektage- /Entlüftungslöchern, aus Metall und/oder Kunststoffen aufgebracht sind.

Die vorstehend beschriebene Injektage-Unterlegscheibe ist dadurch gekennzeichnet, dass, wenn der Anwendungsfall es erfordert, auf der Unterseite der Injektage- Unterlegscheibe zwischen Injektage-/Entlüftungsloch und Mittelloch eine eingebrachte kreisrunde Nut, die unterschiedlich dimensioniert sein kann, eingebracht ist.

Diese Nut weist eine geringere Tiefe auf, als die gefrästen Nuten des oben an dritter Stelle genannten Beispiels einer Injektage-Unterlegscheibe. Diese Nut dient zur Aufnahme einer zylindrischen Abdichtung, die dem jeweiligen Anwendungsfall in Material und Härtegrad angepasst wird, welche eingeklebt werden kann, jedoch nicht muss, in exakt oder leicht grösserer Aussendimension des darunter befindlichen Bohr-/ bzw. Ankerloches in Grundbauteil und/oder zu fixierendem aufgesetztem Bauteil.

Diese Dichtung dient der Abdichtung des Loches, bzw. der Überbrückung des Weges zwischen Unterseite der Injektage-Unterlegscheibe und dem Anker- oder Dübelrand. Dieses ist anzuwenden, wenn mittels der Unterlegscheibe ein anderes Bauteil auf dem Grundbauteil fixiert wird,
jedoch im Zuge der Injektage, bzw. anderer geeigneter Einbringungsarten, nicht oder vorerst nicht mit dem Grundbauteil verklebt werden soll.

Die vorstehend beschriebene Injektage-Unterlegscheibe ist dadurch gekennzeichnet, dass, wenn der Anwendungsfall es erfordert, an der unteren Aussenkante der Injektage-Unterlegscheibe umlaufend eine schräge, konvexe oder konkave Verjüngung ausgebildet ist. Diese dient der Aufnahme von festen oder fexiblen Abdichtungsmitteln, welche nach Montage der Injektage-Unterlegscheibe aufgebracht werden.

## Patentansprüche

1. Verfahren zur nachträglichen Ertüchtigung eines in ein Bohrloch (18) eingesetzten Befestigungsmittels, das sich bereits in seinem montierten Zustand befindet, mit den folgenden Schritten:
• Aufsetzen einer Injektage-Unterlegscheibe (28), die ein Mittelloch (30), eine Befüllöffnung (32) und eine Entlüftungsöffnung (34) aufweist, auf das zu ertüchtigende Befestigungsmittel,
• Verfüllen von zwischen Befestigungsmittel und Bohrloch (18) vorhandenen Hohlräumen durch Injizieren von Injektageharz durch die Befüllöffnung (32).

2. Verfahren nach Anspruch 1, **dadurch gekennzeichnet, dass** das Verfahren ausgeführt wird, ohne ein mit dem Befestigungsmittel befestigtes Objekt zu entfernen.

3. Verfahren nach Anspruch 1 oder 2, **dadurch gekennzeichnet, dass** durch das Injizieren des Injektageharzes eine Verfestigung des umgebenden Betons, Mauerwerks oder Holzes erreicht wird.

4. Verfahren nach einem der Ansprüche 1 bis 3, **dadurch gekennzeichnet, dass** beim Verfüllen Hohlräume, die durch Plastizieren von Beton beim Anziehen des Befestigungsmittels oder Hohlräume, die durch das Setzen des Befestigungsmittels mit Hammerbohrverfahren entstanden sind, verfüllt werden.

5. Verfahren nach einem der Ansprüche 1 bis 4, **dadurch gekennzeichnet, dass** vor dem Aufsetzen der Injektage-Unterlegscheibe (28) eine auf dem Befestigungsmittel sitzende Mutter (26) gelöst wird.

6. Verfahren nach einem der Ansprüche 1 bis 5, **dadurch gekennzeichnet, dass** beim Aufsetzen der Injektage-Unterlegscheibe (28) eine vorhandene Unterlegscheibe (24) des Befestigungsmittels gegen die Injektage-Unterlegscheibe (28) ausgetauscht wird.

7. Verfahren nach einem der Ansprüche 1 bis 6, **dadurch gekennzeichnet, dass** nach dem Aufsetzen der Injektage-Unterlegscheibe (28) eine Mutter (26) wieder fest auf das Befestigungsmittel aufgeschraubt wird.

8. Verfahren nach einem der Ansprüche 1 bis 7, **dadurch gekennzeichnet, dass** Spalte zwischen Injektage-Unterlegscheibe (28) und einer Gewindestange (22) des Befestigungmittels vor dem Injizieren mit einem Dichtmittel oder einer Dichtung abgedichtet werden.

9. Verfahren nach einem der Ansprüche 1 bis 8, **dadurch gekennzeichnet, dass** auf eine Gewindestange (22) des Befestigungsmittels ein zylindrischer Deckel aufgeschraubt wird, der ein Austreten von Injektageharz verhindert.

10. Verfahren nach einem der Ansprüche 1 bis 9, **dadurch gekennzeichnet, dass** vor dem Injizieren eine zylindrische Pressdichtung gesetzt wird.

11. Verfahren nach einem der Ansprüche 1 bis 10, **dadurch gekennzeichnet, dass** in die Befüllöffnung (32) und/oder in die Entlüftungsöffnung (34) ein Klemmstift (44, 46) gesetzt wird.

12. Verfahren nach einem der Ansprüche 1 bis 11, **dadurch gekennzeichnet, dass** während des Injizierens des Injektageharzes Luft durch die Entlüftungsöffnung (34) abgeführt wird.

13. Verfahren nach einem der Ansprüche 1 bis 12, **dadurch gekennzeichnet, dass** an die Entlüftungsöffnung (34) bzw. einen darin gesetzten Klemmstift (46) ein Entlüftungsschlauch (58) angeschlossen wird.

14. Verfahren nach einem der Ansprüche 1 bis 13, **dadurch gekennzeichnet, dass** mit dem Befestigungsmittel eine Stahlplatte (10) befestigt ist und ein Zwischenraum zwischen Stahlplatte (10) und Untergrund beim Verfüllen ebenfalls mit Injektageharz verfüllt wird.

15. Verfahren nach einem der Ansprüche 1 bis 14, **dadurch gekennzeichnet, dass** die Stahlplatte (10) gegenüber dem Untergrund verdämmt wird.

16. Verfahren nach einem der Ansprüche 14 oder 15, **dadurch gekennzeichnet, dass** an einer oberen Ecke der Stahlplatte (10) ein Entlüftungschlauch montiert wird, durch den beim Verfüllen kontrolliert Injektageharz austritt.

17. Verfahren nach einem der Ansprüche 14 bis 16, **dadurch gekennzeichnet, dass** die Stahlplatte ein Loch erhält, durch das zusätzlich Injektageharz injiziert wird.

18. Verfahren nach einem der Ansprüche 1 bis 17, **dadurch gekennzeichnet, dass** das Befestigungsmittel ein Dübel (50), eine Schraube, ein Durchsteckanker oder ein Vorsteckanker ist.

19. Verfahren nach Anspruch 18, **dadurch gekennzeichnet, dass** der Dübel (50) eine zentrisch angeordnete Gewindestange oder -schraube aufweist.

20. Verfahren nach einem der Ansprüche 1 bis 19, **dadurch gekennzeichnet, dass** eine Injektage-Unterlegscheibe (28) mit den Merkmalen eines der Ansprüche 21 bis 32 verwendet wird.

21. Injektage-Unterlegscheibe (28) zur Einbringung eines liquiden Materials zur Ertüchtigung eines Befestigungsmittels, wobei die Injektage-Unterlegscheibe (28) eine Unterseite (36), eine Oberseite (42), ein Mittelloch (30) und ein Injektageloch aufweist, wobei auf der Unterseite (36) eine erste Nut (64) angeordnet ist, die vom Injektageloch zum Mittelloch (30) führt, **dadurch gekennzeichnet, dass** die Injektage-Unterlegscheibe (28) ein Entlüftungsloch aufweist und dass auf der Unterseite (36) eine weitere erste Nut (64) angeordnet ist, die vom Entlüftungsloch zum Mittelloch (30) führt, wobei das Entlüftungsloch und das Injektageloch bezüglich des Mittellochs (30) gegenüberliegend angeordnet sind.

22. Injektage-Unterlegscheibe (28) nach Anspruch 21, **dadurch gekennzeichnet, dass** eine der ersten Nuten (64) radial, schräg oder kreisbogenförmig verläuft.

23. Injektage-Unterlegscheibe (28) nach Anspruch 22, **dadurch gekennzeichnet, dass** eine kreisbogenförmige erste Nut (64) zwei Öffnungen zum Mittelloch (30) aufweist.

24. Injektage-Unterlegscheibe (28) nach einem der Ansprüche 21 bis 23, **dadurch gekennzeichnet, dass** auf der Unterseite (36) eine zweite Nut (66) angeordnet ist, die kreisförmig zwischen einem Rand der Injektage-Unterlegscheibe (28) und dem Injektageloch sowie dem Entlüftungsloch verläuft.

25. Injektage-Unterlegscheibe (28) nach Anspruch 24, **dadurch gekennzeichnet, dass** in die zweite Nut (66) ein Abdichtungsmaterial oder ein Dichtungsring eingebracht oder eingeklebt ist.

26. Injektage-Unterlegscheibe (28) nach einem der Ansprüche 21 bis 25, **dadurch gekennzeichnet, dass** auf der Oberseite (42) eine dritte Nut (70) angeordnet ist, die kreisförmig zwischen dem Mittelloch (30) und dem Injektageloch sowie dem Entlüftungsloch verläuft.

27. Injektage-Unterlegscheibe (28) nach Anspruch 26, **dadurch gekennzeichnet, dass** in die dritte Nut (70) ein Abdichtungsmaterial oder ein Dichtungsring eingebracht oder eingeklebt ist.

28. Injektage-Unterlegscheibe (28) nach einem der Ansprüche 21 bis 27, **dadurch gekennzeichnet, dass** auf oder in das Injektageloch und/oder auf oder in das Entlüftungsloch ein abgewinkeltes oder gebogenes Röhrchen auf- bzw. eingesetzt ist.

29. Injektage-Unterlegscheibe (28) nach einem der Ansprüche 21 bis 28, **dadurch gekennzeichnet, dass** auf der Unterseite (36) eine vierte Nut (68) angeordnet ist, die eine geringere Tiefe aufweist als die ersten Nuten (64) und die kreisförmig zwischen dem Mittelloch (30) und dem Injektageloch sowie dem Entlüftungsloch verläuft.

30. Injektage-Unterlegscheibe (28) nach Anspruch 29, **dadurch gekennzeichnet, dass** in die vierte Nut (68) eine zylindrische Abdichtung eingesetzt oder eingeklebt ist.

31. Injektage-Unterlegscheibe (28) nach Anspruch 21 bis 30, **dadurch gekennzeichnet, dass** an einer unteren Außenkante der Injektage-Unterlegscheibe (28) umlaufend eine Verjüngung ausgebildet ist.

## Claims

1. A method for the retroactive strengthening of a fastening means inserted into a drilled hole (18), which fastening means is already in its mounted state, having the following steps:
• mounting an injection washer (28), which has a central hole (30), a filling opening (32) and a ventilation opening (34), onto the fastening means to be strengthened,
• filling cavities present between the fastening means and the drilled hole (18) by injecting injection resin through the filling opening (32).

2. The method according to Claim 1, **characterized in that** the method is executed without removing an object which is fastened to the fastening means.

3. The method according to Claim 1 or 2, **characterized in that** injecting the injection resin results in the stabilization of the surrounding concrete, masonry or timber.

4. The method according to any one of Claims 1 to 3, **characterized in that** cavities, which are created by plasticizing of concrete on tightening the fastening means, or cavities, which are created by the positioning of the fastening means with the hammer drilling method, are filled during the filling.

5. The method according to any one of Claims 1 to 4, **characterized in that** prior to the mounting of the injection washer (28) a nut (26) seated on the fastening means is loosened.

6. The method according to any one of Claims 1 to 5, **characterized in that** during the mounting of the injection washer (28) an existing washer (24) of the fastening means is exchanged for the injection washer (28).

7. The method according to any one of Claims 1 to 6, **characterized in that** following the mounting of the injection washer (28) a nut (26) is firmly screwed onto the fastening means again.

8. The method according to any one of Claims 1 to 7, **characterized in that** gaps between the injection washer (28) and a threaded rod (22) of the fastening means are sealed prior to injecting with a sealing material or a seal.

9. The method according to any one of Claims 1 to 8, **characterized in that** a cylindrical lid is screwed onto a threaded rod (22) of the fastening means, said cylindrical lid preventing the injection resin from escaping.

10. The method according to any one of Claims 1 to 9, **characterized in that** a cylindrical pressure seal is positioned prior to the injecting.

11. The method according to any one of Claims 1 to 10, **characterized in that** a clamping pin (44, 46) is positioned in the filling opening (32) and/or in the ventilation opening (34).

12. The method according to any one of Claims 1 to 11, **characterized in that** air is carried away through the ventilation opening (34) during the injecting of the injection resin.

13. The method according to any one of Claims 1 to 12, **characterized in that** a ventilation hose (58) is connected to the ventilation opening (34) and/or a clamping pin (46) positioned therein.

14. The method according to any one of Claims 1 to 13, **characterized in that** a steel plate (10) is fastened to the fastening means and an intermediate space between the steel plate (10) and subsoil is also filled with injection resin during the filling.

15. The method according to any one of Claims 1 to 14, **characterized in that** the steel plate (10) is tamped with respect to the subsoil.

16. The method according to any one of Claims 14 or 15, **characterized in that** a ventilation hose, through which injection resin escapes in a controlled manner during the filling, is assembled at an upper corner of the steel plate (10).

17. The method according to any one of Claims 14 to 16, **characterized in that** the steel plate has a hole through which injection resin is additionally injected.

18. The method according to any one of Claims 1 to 17, **characterized in that** the fastening means is a dowel (50), a bolt, a through-wall anchor or a pre-set anchor.

19. The method according to Claim 18, **characterized in that** the dowel (50) comprises a centrically arranged threaded rod or threaded bolt.

20. The method according to any one of Claims 1 to 19, **characterized in that** an injection washer (28) having the features of any one of Claims 21 to 32 is used.

21. An injection washer (28) for introducing a liquid material for strengthening a fastening means, wherein the injection washer (28) has a lower side (36), an upper side (42), a central hole (30) and an injection hole, wherein a first groove (64) is arranged on the lower side (36), said groove leading from the injection hole to the central hole (30), **characterized in that** the injection washer (28) has a ventilation hole and that an additional first groove (64) is arranged on the lower side (36), said groove leading from the ventilation hole to the central hole (30), wherein the ventilation hole and the injection hole are arranged opposite with respect to the central hole (30).

22. The injection washer (28) according to Claim 21, **characterized in that** one of the first grooves (64) extends radially, diagonally or in the form of a circular arc.

23. The injection washer (28) according to Claim 22, **characterized in that** a first groove (64) in the form of a circular arc has two openings to the central hole (30).

24. The injection washer (28) according to any one of Claims 21 to 23, **characterized in that** a second groove (66) is arranged on the lower side (36), said groove extending in the form of a circular arc between one edge of the injection washer (28) and the injection hole as well as the ventilation hole.

25. The injection washer (28) according to Claim 24, **characterized in that** a sealing material or a sealing ring is introduced or bonded into the second groove (66).

26. The injection washer (28) according to any one of Claims 21 to 25, **characterized in that** a third groove (70) is arranged on the upper side (42), said groove extending in the form of a circular arc between the central hole (30) and the injection hole as well as the ventilation hole.

27. The injection washer (28) according to Claim 26, **characterized in that** a sealing material or a sealing ring is introduced or bonded into the third groove (70).

28. The injection washer (28) according to any one of Claims 21 to 27, **characterized in that** an angled or bent small pipe is mounted or inserted onto or into the injection hole and/or onto or into the ventilation hole.

29. The injection washer (28) according to any one of Claims 21 to 28, **characterized in that** a fourth groove (68) is arranged on the lower side (36), said groove having a lesser depth than the first grooves (64) and extending in the form of a circular arc between the central hole (30) and the injection hole as well as the ventilation hole.

30. The injection washer (28) according to Claim 29, **characterized in that** a cylindrical seal is inserted or bonded into the fourth groove (68).

31. The injection washer (28) according to Claims 21 to 30, **characterized in that** a tapering is configured circumferentially on a lower outer edge of the injection washer (28).

## Revendications

1. Procédé pour l'amélioration ultérieure de la résistance d'un moyen de fixation inséré dans un trou de forage (18), trou se trouvant déjà à son état monté, avec les étapes suivantes :
• pose d'une rondelle pour injection (28) comportant un trou central (30), un orifice de remplissage (32) et un orifice d'aération (34) sur le moyen de fixation à améliorer,
• remplissage de cavités existant entre le moyen de fixation et le trou de forage (18) par injection de résine d'injection à travers l'orifice de remplissage (32).

2. Procédé selon la revendication 1, **caractérisé en ce que** le procédé est exécuté sans enlever un objet fixé avec le moyen de fixation.

3. Procédé selon la revendication 1 ou 2, **caractérisé en ce qu'**on atteint une consolidation du béton, de la maçonnerie ou du bois environnant par injection de la résine d'injection.

4. Procédé selon l'une quelconque des revendications 1 à 3, **caractérisé en ce que**, lors du remplissage, des cavités qui se sont créées par plastification de béton lors du durcissement du moyen de fixation ou des cavités qui sont créées par le tassement du moyen de fixation via un procédé à la foreuse percutante sont remplies.

5. Procédé selon l'une quelconque des revendications 1 à 4, **caractérisé en ce que**, avant la pose de la rondelle pour injection (28), un écrou (26) se trouvant sur le moyen de fixation est desserré.

6. Procédé selon l'une quelconque des revendications 1 à 5, **caractérisé en ce que**, lors de la pose de la rondelle pour injection (28), un rondelle (24) existante du moyen de fixation est remplacée par la rondelle pour injection (28).

7. Procédé selon l'une quelconque des revendications 1 à 6, **caractérisé en ce que**, après la pose de la rondelle pour injection (28), un écrou (26) est de nouveau vissé solidement sur le moyen de fixation.

8. Procédé selon l'une quelconque des revendications 1 à 7, **caractérisé en ce que** des fentes entre la rondelle pour injection (28) et une tige filetée (22) du moyen de fixation sont étanchéifiées avant l'injection avec un produit d'étanchéité ou un joint d'étanchéité.

9. Procédé selon l'une quelconque des revendications 1 à 8, **caractérisé en ce qu'**un couvercle cylindrique est vissé sur une tige filetée (22) du moyen de fixation, couvercle cylindrique qui empêche toute fuite de résine d'injection.

10. Procédé selon l'une quelconque des revendications 1 à 9, **caractérisé en ce qu'**un joint de compression cylindrique est posé avant l'injection.

11. Procédé selon l'une quelconque des revendications 1 à 10, **caractérisé en ce qu'**une goupille de serrage (44, 46) est posée dans l'orifice de remplissage (32) et/ou dans l'orifice d'aération (34).

12. Procédé selon l'une quelconque des revendications 1 à 11, **caractérisé en ce que** de l'air est évacué à travers l'orifice d'aération (34) pendant l'injection de la résine d'injection.

13. Procédé selon l'une quelconque des revendications 1 à 12, **caractérisé en ce qu'**un tuyau d'aération (58) est raccordé à l'orifice d'aération (34) respectivement à une goupille de serrage (46) posée à l'intérieur de ce dernier.

14. Procédé selon l'une quelconque des revendications 1 à 13, **caractérisé en ce qu'**une plaque d'acier (10) est fixée avec le moyen de fixation et un espace intermédiaire entre la plaque d'acier (10) et la base est également rempli de résine d'injection lors du remplissage.

15. Procédé selon l'une quelconque des revendications 1 à 14, **caractérisé en ce que** la plaque d'acier (10) est remblayée par rapport à la base.

16. Procédé selon l'une quelconque des revendications 14 ou 15, **caractérisé en ce qu'**un tuyau de purge d'air est monté sur un coin supérieur de la plaque d'acier (10), tuyau à travers lequel de la résine d'injection s'écoule de manière contrôlée lors du remplissage.

17. Procédé selon l'une quelconque des revendications 14 à 16, **caractérisé en ce que** la plaque d'acier reçoit un trou à travers lequel de la résine d'injection est en plus injectée.

18. Procédé selon l'une quelconque des revendications 1 à 17, **caractérisé en ce que** le moyen de fixation est une cheville (50), une vis, une cheville d'ancrage ou une ancre à clavette.

19. Procédé selon la revendication 18, **caractérisé en ce que** la cheville (50) comporte une tige filetée ou une vis disposée centriquement.

20. Procédé selon l'une quelconque des revendications 1 à 19, **caractérisé en ce qu'**une rondelle pour injection (28) présentant les caractéristiques de l'une des revendications 21 à 32 est utilisée.

21. Rondelle pour injection (28) pour l'introduction d'un matériau liquide pour l'amélioration d'un moyen de fixation, dans lequel la rondelle pour injection (28) présente une face inférieure (36), une face supérieure (42), un trou central (30) et un trou d'injection, dans lequel est disposée sur la face inférieure (36) une première rainure (64) qui mène du trou d'injection au trou central (30), **caractérisé en ce que** la rondelle pour injection (28) comporte un trou de purge d'air et **en ce qu'**est disposée sur la face inférieure (36) une autre première rainure (64) qui mène du trou de purge d'air au trou central (30), dans lequel le trou de purge d'air et le trou d'injection sont disposés en face du trou central (30).

22. Rondelle pour injection (28) selon la revendication 21, **caractérisée en ce qu'**une des premières rainures (64) court radialement, en biais ou en forme d'arc.

23. Rondelle pour injection (28) selon la revendication 22, **caractérisée en ce qu'**une première rainure (64) en forme d'arc comporte deux orifices vers le trou central (30).

24. Rondelle pour injection (28) selon l'une quelconque des revendications 21 à 23, **caractérisée en ce qu'**est disposée sur la face inférieure (36) une deuxième rainure (66) qui court de manière circulaire entre un bord de la rondelle pour injection (28) et le trou d'injection ainsi que le trou de purge d'air.

25. Rondelle pour injection (28) selon la revendication 24, **caractérisée en ce qu'**est introduit(e) ou collé(e) dans la deuxième rainure (66) un matériau d'étanchement ou une bague d'étanchéité.

26. Rondelle pour injection (28) selon l'une quelconque des revendications 21 à 25, **caractérisée en ce qu'**est disposée sur la face supérieure (42) une troisième rainure (70) qui court de manière circulaire entre le trou central (30) et le trou d'injection ainsi que le trou de purge d'air.

27. Rondelle pour injection (28) selon la revendication 26, **caractérisée en ce qu'**est introduit(e) ou collé(e) dans la troisième rainure (70) un matériau d'étanchement ou une bague d'étanchéité.

28. Rondelle pour injection (28) selon l'une quelconque des revendications 21 à 27, **caractérisée en ce qu'**un tube coudé ou courbé est posé resp. inséré sur ou dans le trou d'injection et/ou sur ou dans le trou de purge d'air.

29. Rondelle pour injection (28) selon l'une quelconque des revendications 21 à 28, **caractérisée en ce qu'**est disposée sur la face inférieure (36) une quatrième rainure (68) de profondeur inférieure à celle des premières rainures (64) et qui court de manière circulaire entre le trou central (30) et le trou d'injection ainsi que le trou de purge d'air.

30. Rondelle pour injection (28) selon la revendication 29, **caractérisée en ce qu'**un dispositif d'étanchéité cylindrique est inséré ou collé dans la quatrième rainure (68).

31. Rondelle pour injection (28) selon la revendication 21 à 30, **caractérisée en ce qu'**un effilement circonférentiel est formé sur un bord extérieur inférieur de la rondelle pour injection (28).
